(19) Europäisches Patentamt
European Patent Office
Office européen des brevets

(11) **EP 1 661 346 B1**

(12) **EUROPEAN PATENT SPECIFICATION**

(45) Date of publication and mention
of the grant of the patent:
**30.07.2008 Bulletin 2008/31**

(21) Application number: **03817407.4**

(22) Date of filing: **04.09.2003**

(51) Int Cl.:
*H04L 27/26* (2006.01)    *H04L 1/06* (2006.01)

(86) International application number:
**PCT/EP2003/009817**

(87) International publication number:
**WO 2005/006696 (20.01.2005 Gazette 2005/03)**

(54) **APPARATUS AND METHOD FOR PROVIDING A MULTI-CARRIER SIGNAL TO BE TRANSMITTED AND APPARATUS AND METHOD FOR PROVIDING AN OUTPUT SIGNAL FROM A RECEIVED MULTI-CARRIER SIGNAL**

VORRICHTUNG UND VERFAHREN ZUR BEREITSTELLUNG EINES ZU SENDENDEN MEHRTRÄGERSIGNALS UND VORRICHTUNG UND VERFAHREN ZUR BEREITSTELLUNG EINES AUSGANGSSIGNALS AUS EINEM EMPFANGENEN MEHRTRÄGERSIGNAL

APPAREIL ET PROCEDE DE PRODUCTION D'UN SIGNAL MULTIPORTEUSE A TRANSMETTRE ET APPAREIL ET PROCEDE DE PRODUCTION D'UN SIGNAL DE SORTIE A PARTIR D'UN SIGNAL MULTIPORTEUSE RECU

(84) Designated Contracting States:
**DE GB**

(30) Priority: **14.07.2003 EP 03016002**

(43) Date of publication of application:
**31.05.2006 Bulletin 2006/22**

(73) Proprietor: **NTT DoCoMo, Inc.
Tokyo 100-6150 (JP)**

(72) Inventor: **BAUCH, Gerhard
80799 München (DE)**

(74) Representative: **Schoppe, Fritz et al
Schoppe, Zimmermann, Stöckeler & Zinkler
Patentanwälte
Postfach 246
82043 Pullach bei München (DE)**

(56) References cited:
EP-A- 1 126 647          US-A1- 2003 072 382
US-B1- 6 347 120

• YE LI ET AL: "Clustered OFDM with channel estimation for high rate wireless data" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 November 1999 (1999-11-15), pages 43-50, XP010370695 ISBN: 0-7803-5904-6

**Description**

The present invention is in the field of telecommunication and, in particular, in the field of multi-carrier transmission schemes using diversity techniques.

In wireless communications, transmit diversity techniques are used in order to mitigate the detrimental effects of fading. A simple transmit diversity technique is delay diversity where the same signal is transmitted from multiple antennas with different delay. This results in an equivalent of input channel with increased frequency selectivity, and therefore, increased frequency diversity - compared to the original sub-channel from each transmit to each receive antenna. In a orthogonal frequency division multiplexing (OFDM), frequency diversity introduced in a transmitter can be exploited by a forward error correcting decoder arranged in a receiver.

However, introducing additional delay in multicarrier transmission systems, which is often required for achieving a time diversity, requires a longer guard interval which, consequently, results in a reduced bandwidth efficiency. If the guard interval is not sufficiently long, inter-carrier interference may occur. However, increasing the length of the guard interval results in a reduced bandwidth efficiency, since the guard interval cannot be applied to information transmission.

An increased frequency selectivity without exceeding the guard interval can be achieved introducing a cyclic delay diversity, as described in: A. Dammann and S. Kaiser, "Standard conformable antenna diversity techniques for OFDM systems and its application to the DVB-T system", IEEE Globecom, pages 3100-3105, November 2001, in: A. Dammann and S. Kaiser, "Low complex standard conformable antenna diversity techniques for OFDM systems and its application to the DVB-T system", 4th International ITG Conference on Source and Channel Coding, pages 253-259, January 2002, and in: A. Dammann, R. Raulefs, and S. Kaiser, "Beamforming in combination with space-time diversity for broadband OFDM systems", IEEE Conference on Communications (ICC), pages 165-171, April 2002. In accordance with the teachings of the above documents, a delay is introduced in a cyclic manner such that the guard interval is not exceeded.

In cyclic delay diversity is used, cyclic delayed versions of data may be transmitted simultaneously from different transmit antennas and received by plurality of receive antennas. Effectively, the resulting multiple-input multiple-output (MIMO) channel is transformed to a single-input multiple output (SIMO) channel with increased frequency selectivity. Hence, spatial diversity is transformed into frequency diversity. The increased frequency selectivity can be exploited, provided data encoding in the transmitter, by an error correcting decoder in order to improve the performance of the overall system.

Due to the increased frequency-selectivity, channel estimation becomes a more difficult task, since some frequency bands become more attenuated than others. When compared with the original system, a number of pilot symbols has to be increased, which results in lower bandwidth efficiency. For this reason, differential modulation which does not require a continuous channel estimation as long as the channel is constant during transmission of two successive modulated symbols might be attractive.

Differential modulation can be used separately on each sub-carrier, as proposed in: B. Allen, F. Said, G. Bauch, G. Auer, H. Aghvami, "Differential cyclic delay diversity for multi-carrier based transmission schemes", submitted to IEEE Proceedings on Communications, 2003. However, a disadvantage of the approach disclosed in the above-mentioned document is that a reference symbol has to be transmitted in advance on each sub-carrier which results in a full OFDM symbol overhead. This is undesired, particularly in 4G (4G = fourth generation) mobile radio systems, where a large number of sub-carriers and a relatively small number of OFDM symbols per frame is expected.

As mentioned above, an increased frequency selectivity without exceeding the guard interval can also be achieved by using cyclic delay diversity. This approach has been analyzed in: A. Dammann, P. Lusina, and M. Bossert, "On the equivalence of space-time block coding with multipath propagation and/or cyclic delay diversity in OFDM", IEEE European Wireless, 2002, in : M. Bossert, A. Huebner, F. Schuehlien, H. Haas, and E. Costa, "On cyclic delay diversity in OFDM based transmission schemes", OFDM Workshop, 2002, and in: D. Gore, S. Sandhu, and A. Paulraj: "Delay diversity codes for frequency selective channels", International Conference on Communications (ICC), pages 19498-1953, IEEE, April 2002.

The combination of cyclic delay diversity and differential modulation was proposed in: B. Allen, F. Said, G. Bauch, G. Auer, H. Aghvami, "Differential cyclic delay diversity for multi-carrier based transmission schemes", submitted to IEEE Proceedings on Communications, 2003. In this document, however, differential modulation on each sub-carrier has been considered. Hence, if a particular sub-carrier is disturbed, the data stream transmitted via this carrier may not be detected error free, which increases the bit error rate.

A further disadvantage of the above-mentioned prior art concepts is, that due to the increased frequency selectivity, a higher pilot symbol overhead for continuous channel estimation is necessary. In order to cope with this problem, differential modulation may be an used as an alternative, since differentially modulated signals can be detected without comprehensive channel estimation or channel equalization schemes.

Furthermore, in order to achieve low delay and low reference symbol overhead, differential modulation in frequency direction may be considered. The requirement for non-coherent detection is that the channel is approximately constant to the neighboring sub-carriers.

However, cyclic delay diversity may affect the correlation between the channel coefficients of the neighboring sub-carriers. To be more specific, cyclic delay diversity may cause a low correlation between channel coefficients associated with, for example, neighboring sub-carriers. Hence, a straightforward differential modulation in frequency direction will fail.

More specifically, if successive discrete values of a differentially modulated signal to be transmitted are assigned to successive carrier frequencies, then, at the receiver, an increased bit error rate may result since a differentially encoded signal transmitted via successive carrier frequencies associated with uncorrelated channel coefficients can not be recovered by a differential decoding scheme at the receiver.

In order to overcome the above difficulties, an additional redundancy may be introduced by additional coding in the transmitter. However, this approach suffers from a reduced bandwidth efficiency.

Additionally, differential space-time modulation may be used, as described in: B. Hochwald and W. Swelden, "Differential unitary space-time modulation", IEEE Transactions on Communications, 48(12):2041-2052, December 2000, in B. L. Hughes, "Differential space-time modulation", IEEE Transactions on Information Theory, 46(7):2567-2578, November 2000, and in V. Tarokh and H. Jafarkhani, "A differential detection scheme for transmit diversity", IEEE Journal on Selected Areas in Communications, 18(7):1169-1174, July 2000. However, this approach suffers from increased system's complexity.

US 6,347,120 B1 discloses a communication method, transmitter, receiver and cellular radio communication system. When the high priority data and the low priority data are transmitted at the same time in the multi-carrier communication, a processing in accordance with the priority is performed to decode data accurately. At the transmitting side, the high priority symbols and the low priority symbols are alternately positioned and each symbol of the differential symbol stream obtained by differential-modulating the high priority data based on the differential phase is assigned to sub-carrier. The transmission signal in which the sub-carriers on which high priority symbols are superimposed and the sub-carriers on which low priority symbols are superimposed are positioned alternately is transmitted. At the receiving side, when the transmission signal is received at a reception timing having transfer delay, the phase offset component is detected from the high priority symbol of the symbol stream obtained by performing a predetermined reception processing and the differential demodulation on the reception signal, and the high priority data is decoded. After the phase offset component is removed from the phase component of the low priority symbol of the symbol stream, the low priority data is decoded.

US 2003/072382 A1 discloses a spatial-temporal system for communication with advantageously reduced complexity. The system may take advantage of multiple transmitter antenna elements and/or multiple receiver antenna elements, or multiple polarizations of a single transmitter antenna element and/or single receiver antenna element. The system is not restricted to wireless contexts and may exploit any channel having multiple inputs or multiple outputs and certain other characteristics. Multi-path effects in a transmission medium cause a multiplicative increase in capacity.

It is the object of the present invention to provide a concept for efficiently exploiting the available bandwidth in a multi-carrier transmission system using diversity schemes.

This object is achieved by an apparatus for providing a multi-carrier signal according to claim 1 or by an apparatus for providing an output signal from a received multi-carrier signal according to claim 9 or by a method for providing a multi-carrier signal according to claim 19 or by a method for providing an output signal from a received multi-carrier signal according to claim 20 or by a computer program according to claim 21.

The present invention is based on the finding that, in a multi-carrier transmission scenario, the available bandwidth can efficiently be exploited and the bit error rate can be reduced when respective signals to be transmitted are assigned to a respective set of carrier frequencies corresponding to correlated channel coefficients characterizing an effective channel frequency response at the receiver.

In particular, it has been found that the signal to be transmitted can be divided into a plurality of sub-signals representing the above-mentioned signals to be transmitted, each of the sub-signals including a number of discrete values. Instead of encoding the signal to be transmitted, the different sub-signals are encoded individually, and the resulting coded sub-signals may be assigned to carrier frequencies corresponding to correlated channel coefficients.

More specifically, a number of discrete values of a respective coded sub-signal may be assigned to a subset of carrier frequencies of a set of available carrier frequencies, so that a bit error rate is reduced, since sub-signals transmitted via the respective subset of carrier frequencies corresponding to correlated channel coefficients are processed, e.g. encoded. For example, if discrete values of a first sub-signal are encoded differentially, i.e. if a portion of information is determined by at least two discrete values of the sub-signal to be encoded, then the discrete values characterizing the information to be transmitted are assigned to the subset of carrier frequencies. At the receiver, the information can be efficiently recovered, since an information lost due to uncorrelated channel coefficients does not occur.

Preferably, the inventive concept may be applied, when a plurality of transmit antennas is used to transmit a plurality of sub-signals from a plurality of transmitting points in order to achieve diversity. At a receiving point, one or several receive antennas may be applied for signal interception. The signals impinging on each antenna include a superposition of sub-signals transmitted by the plurality of transmit antennas from the transmitting point.

Each of the superimposed signals includes a number of sub-signals having discrete values assigned to different carrier frequencies, each of the sub-signals being transmitted via a different subset of carrier frequencies, so that respective sub-signals are being transmitted via respective communication channels having correlated channel coefficients in the frequency domain.

Prior to decoding, a maximum ratio combining can be applied at the receiver, in order to take each of the received sub-signals into account for selecting received sub-signals being characterized by the most signal power, which may further decrease the bit error probability.

Alternatively, the inventive approach may be applied in transmission systems using only one transmit antenna and a plurality of received antennas, since diversity also can be achieved at the receiver. The inventive concept can be used in such a system in a straightforward way, since the inventive processing scheme is applied to signals to be transmitted independent on a used diversity scheme.

Moreover, since the different sub-signals are transmitted via carrier frequencies corresponding to correlated channel coefficients, differential coding or modulation schemes, based on information coding in a difference of two successive modulated symbols (for example difference phase shift keying, DPSK, or differential amplitude phase shift keying, DAPSK) can be applied. In this case, a continuous channel estimation scheme is not necessary, which further reduces the system's complexity and increases the bandwidth efficiency since reference symbols (also referred to as training or pilot symbols) reducing the same does not have to be continuously transmitted for channel estimation purposes.

It is a further advantage of the present invention, that the available bandwidth can efficiently be exploited without exceeding the guard interval, when, for example, an OFDM transmission scheme is used.

It is a further advantage of the present invention, that simple standard differential modulation or coding schemes can be used, since corresponding sub-signals are transmitted by a carrier frequency associated with correlated sub-channels. Hence, the differential coding or modulation schemes can be simplified when compared with, for example, a differential space-time modulation scheme.

According to the present invention, the data stream to be transmitted is divided into multiple streams which are, differentially and separately, coded or modulated. The respective coded symbols of each stream are transmitted via sub-carriers with high correlation and are not transmitted via sub-carriers having lower correlation, for example neighboring sub-carriers.

Since a standard differential coding or modulation in frequency direction now can be used, the inventive concept provides a further reduction of reference symbols required for channel estimation, because only a single reference symbol need to be transmitted e.g. per an OFDM frame. Hence, an overhead due to reference symbols and the system's complexity is minimized. Furthermore, the bandwidth is more efficiently exploited, since less reference symbols compared with the standard approaches need to be transmitted for channel estimation purposes.

Moreover, the inventive approach introduces a reduction of a detection delay at the receiver. Since coding or modulation frequency direction is preferred, the different received values are present at the same time instant and can simultaneously be detected. Hence, the time delay is reduced compared to differential modulation in time direction, wherein the subsequent discrete values required for detection are received at different time instants.

Further embodiments of the present invention are described in detail with respect to the following figure, in which:

Fig. 1 shows a block diagram of an inventive apparatus for providing multi-carrier signal to be transmitted in accordance with a first embodiment of the present invention;

Fig. 2 shows a block diagram of the inventive processor of Fig. 1;

Fig. 3 shows a block diagram of the inventive assigner of Fig. 1;

Fig. 4 shows a block diagram of an inventive transmitter using cyclic delay diversity with multi-stream differential modulation;

Fig. 5 demonstrates cyclic delay diversity in a coded OFDM (transmitter);

Fig. 6 demonstrates cyclic delay diversity in a coded OFDM (receiver);

Fig. 7a shows a flat fading channel and the corresponding uncoded error rate;

Fig. 7b shows the channel of Fig. 7a transformed by cyclic delay diversity and the corresponding encoded error rate;

Fig. 8 demonstrates differential modulation in frequency direction;

Fig. 9      shows a channel frequency response;

Fig. 10      demonstrates a correlation function for cyclic delay diversity with two transmit antennas;

Fig. 11      demonstrates a differential encoding schemes for cyclic delay diversity using two transmit antennas in the case of a flat fading channel;

Fig. 12      demonstrates a differential encoding scheme with two streams for cyclic delay diversity using two transmit antennas in the case of a frequency selective channel;

Fig. 13      shows a correlation function for cyclic delay diversity using two transmit antennas in the case of a frequency selective channel;

Fig. 14      shows a block diagram of an inventive receiver apparatus;

Fig. 15      shows a receiver for cyclic delay diversity in accordance with a further embodiment of the present invention;

Fig. 16      shows a block diagram of a receiver structure in accordance with a further embodiment of the present invention.

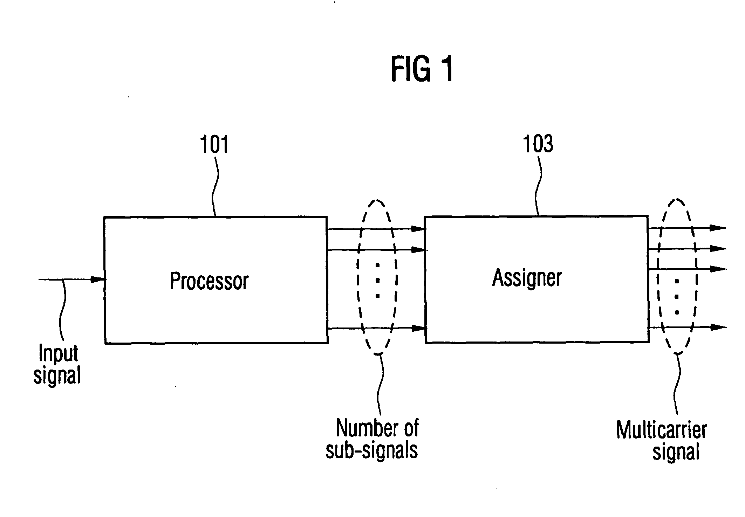

Fig. 1 shows a block diagram of the inventive apparatus for providing a multi-carrier signal to be transmitted from a transmitting point to a receiving point via a plurality of carrier frequencies.

The apparatus of Fig. 1 comprises a processor 101 having a number of outputs coupled to an assigner 103, wherein the assigner 103 has a number of outputs.

The processor 101 is formed for processing an input signal indicated in Fig. 1 for obtaining a number of sub-signals provided by the outputs of the processor 101. Each of the number of sub-signals consists of successive discrete values. For example, each of the sub-signals is represented by a set of discrete values having numbering indices starting with a lowest number index and ending with highest numbering index. Hence, each value of a respective sub-signal is also characterized by a numbering index defining its order of appearance. Hence, the successive discrete values of a respective sub-signal can be assigned to successive numbering indices, for example in an increasing or decreasing order.

The processor 101 is operative to multiply the input signal for providing the number of sub-signals, wherein there is no additional information added to the respective sub-signals. Hence, the number of sub-signals collectively include the same information amount as input signal. As depicted in Fig. 1, the number of sub-signals is greater than 2. However, the number of sub-signals may be equal to 2.

The sub-signals generated by the processor 101 are provided to the assigner 103 via the plurality of outputs of the processor 101. As indicated in Fig. 1, the sub-signals (streams) are provided to the assigner 103 in parallel. Alternatively, the processor 101 may be operative to provide a series of the sub-signals. In this case the number of outputs can be smaller than the number of sub-signals.

The assigner 103 receives the sub-signals (sub-streams), and assigns the different discrete values of the sub-signals to successive carrier frequencies for obtaining a multi-carrier signal. More specifically, the successive carrier frequencies may be associated with numbering indices of a set of successive numbering indices, so that a first carrier frequency is associated with a first numbering index, wherein the first numbering index is equal to or greater than a lowest numbering index in the set of successive numbering indices. Accordingly, a second carrier frequency may be associated with a second numbering index.

Hence, the term "successive" is related to the order of appearance of the carrier frequencies associated with successive numbering indices. The assigner 103 is operative to assign successive discrete values of, for example, a first sub-signal to every $S_{th}$ carrier frequency starting with the first carrier frequency, and to assign successive discrete values of, for example, a second sub-signal to every $S^{th}$ carrier frequency starting with the second carrier frequency wherein the second carrier frequency is different from the first carrier frequency and wherein S denotes a number being equal to or greater than the number of sub-signals. In other words, the assigner 103 may be formed to assign the discrete values of the first sub-signal to every $S^{th}$ carrier frequency and to assign the discrete values of the second sub-signal to every $S^{th}$ carrier frequency by assigning the respective discrete values to the respective numbering indices of the carrier frequencies. For the sake of completeness it is to be noted, that the multi-carrier signal provided by the assigner 103 may be considered as being a frequency domain signal, when for example an OFDM transmission scheme is used.

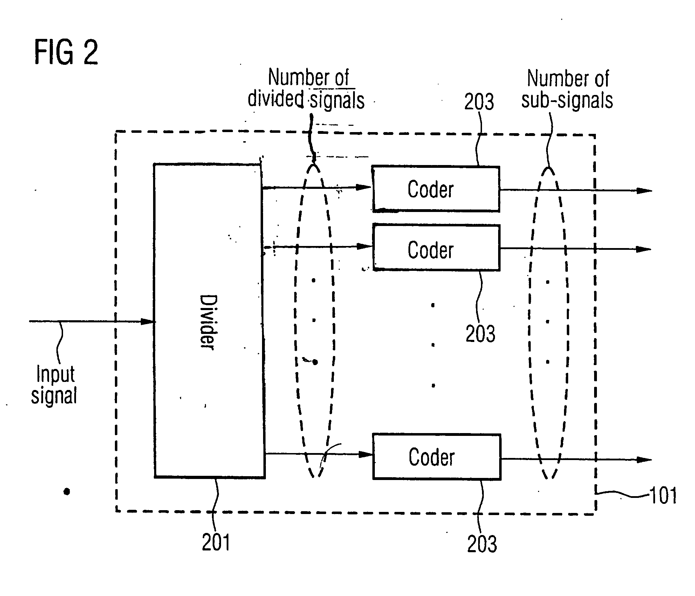

Fig. 2 shows a block diagram of the processor 101 of Fig. 1.

The processor 101 comprises a divider 201 having an input and a number of outputs. The outputs of the divider 201 are connected to a number of (preferably identical) coders 203 such that each of the outputs of the divider 201 is coupled to a respective coder 203. Each of the coders 203 of the number of coder has an input and an output, wherein the number of outputs forms the number of outputs of the processor 101.

The divider 201 is arranged to divide the input signal depicted in Fig. 2 into a number of divided signals via the respective output. In other words, the divider multiplies the input signal and provides, preferably, the number of copies of the input signal, each copy of the input signal representing a divided signal. Preferably, the divider 201 further comprises a demultiplexer for demultiplexing the signal into a number of demultiplexed signals. The number of demultiplex signals may be directly by-passed to the outputs of the divider 201 as the number of divided signals. Alternatively, for a demultiplexed signal of the number of demultiplexed signals provided by the demultiplexer comprised by the divider 201, an interleaver for providing a sub-signal as an interleaved version of the corresponding demultiplexed signal may be used. In this case, the number of interleaved versions of the demultiplexed signals represent the number of divided signals depicted in Fig. 201.

The (optional) interleaver described above may be a conventional interleaver having a matrix structure for reordering the order of appearance of the respective discrete values of the respective signal to be interleaved, so that, for example, the successive discrete values of an interleaved signal are uncorrelated or, so that a uniform energy distribution of the interleaved discrete values. The interleaver can also be implemented as a pseudo-random interleaver.

The coders 203 are formed to separately coding the divided signals for obtaining the number of sub-signals. The coders 203 may be operative to perform any kind of known encoding algorithms. Among other approaches, each of the coders 203 may be operative to combine two signal values of a divided signal of the number of divided signals to obtain a sub-signal value. For example, each coder 203 is a differential coder applied to a divided signal being operative to encode the information as a difference of two subsequent signal values of the respective divided signal.

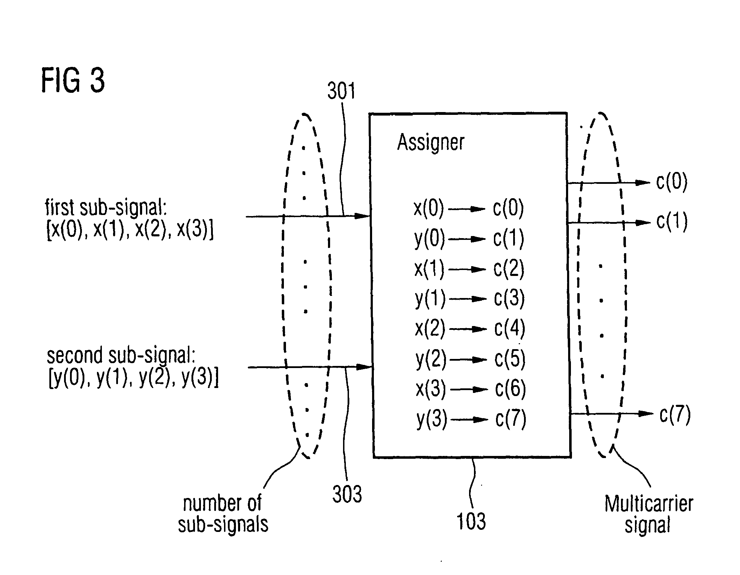

The number of sub-signals generated by the processor 101 is provided to the assigner 103, as depicted in Fig. 3.

The assigner 103 shown in Fig. 3 has a number of inputs. For the sake of simplicity, Fig. 3 shows only two inputs, 301 and 303. The assigner 103 has a number of outputs, wherein the case of eight outputs is considered.

Among others, a first sub-signal via the input 301 and a second sub-signal via the input 303 are provided to the assigner 303, respectively. The first sub-signal provided via the input 303 is, by the way of example, represented by four coefficients [x(0),..., x(3)], wherein "x" denotes a value of the respective first sub-signal, and the indices enclosed in round brackets denote the numbering indices of the sub-signal values in the set of sub-signal values.

Accordingly, the second sub-signal comprises, by the way of example, four sub-signal values [y(0),..., y(3)]. In accordance with the embodiment depicted in Fig. 3, eight carrier frequencies, c(0),..., c(7), are used for transmitting information. The assigner 103 assigns the successive discrete values of the first sub-signal to every second carrier frequency starting with a carrier frequency denoted by c(0). In other words, the successive discrete values of the first sub-signal are assigned to "even" carrier frequency. Accordingly, the discrete sub-signal values of the second sub-signal are assigned every second carrier frequency starting with the carrier frequency denoted by c(1). Following the above-discussed example, the discrete values of the second sub-signal are assigned to "odd" carrier frequencies).

The assigner 103 may be an interleaver having a depth determined by the number of sub-signals. For example, the assigner 103 is a block interleaver having S rows and a number of columns determined by a division of the number of carrier frequencies by S, wherein S denotes the number of sub-signals. Depending on the underlying design, the assigner 103 may have a structure transposed to the structure of the block interleaver described above. In other words, the assigner may have S columns and a number of rows determined by the division of the number of carrier frequencies by S. Hence, the assigner 103 may have a matrix structure of size $S \times N_s/S$, wherein data is written into the matrix row-wise and read from the matrix column-wise. Alternatively, the assigner 103 may have an inverse matrix structure, as described above. Hence, the assignment to sub-carriers can be realized by block interleaving.

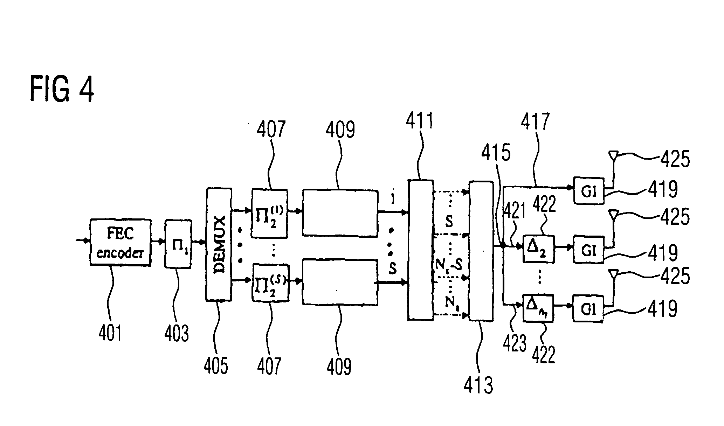

Fig. 4 shows a block diagram of a transmitter according to a further embodiment of the present invention.

The transmitter of Fig. 4 comprises a FEC-encoder 401 (FEC = forward error correction). The FEC encoder 401 has an input and an output. The output of the FEC encoder is coupled to an interleaver 403. The interleaver 403 has an output coupled to a demultiplexer 405 (DEMUX).

The demultiplexer 405 has a number of outputs, wherein each of the number of outputs is coupled to a corresponding interleaver 407. Each of the interleavers 407 has an output coupled to a respective coder 409, wherein each coder 409 may be a differential modulator or a differential coder.

For the sake of completeness it is to be noted here, that the apparatus of Fig. 4 comprises a number of independent paths, each of the independent paths corresponding to an output of the demultiplexer 405.

Each of the coders 409 has an output, wherein the number of outputs of the number of coders 409 are coupled to an assigner 411 in parallel. The assigner 411 has a number of outputs coupled to a transformer 413. The transformer 413 has an output coupled to a multiplying point 415.

At the multiplying point 415, the signal path is divided into a number of paths, wherein the number of paths corresponds to the number of transmit antennas denoted by $n_T$. Furthermore, a means 419 for introducing a guard interval is associated with each signal path.

A first path 417 of the number of paths is directly connected to a corresponding means 419 for introducing a guard interval. The second signal path 421 is coupled via a corresponding means 422 for introducing a delay to a corresponding means 419 for inserting a guard interval. The signal path 423 is, accordingly, coupled to a corresponding means 419 for inserting a guard interval via a corresponding means 422 for introducing a delay.

Summarizing, the apparatus shown in Fig. 4 has a number of identical means 422 for introducing a delay, the number of the means 422 for introducing a delay being equal to a number of transmit antennas less one. As depicted in Fig. 4, each path is coupled to a corresponding means 419 for introducing a guard interval, so that the apparatus of Fig. 4 has a number of means 419 for introducing a guard interval, the number of means 419 being equal to the number of transmit antennas. Each of the means 419 for introducing a guard interval has an output provided to a respective transmit antenna 425 of the number of transmit antennas.

It is to be noted here, that the outputs of the respective means 419 for introducing the guard interval are directly provided to the respective transmit antenna 425 in order to simplify the following explanation and to demonstrate the very principle of the inventive apparatus. In fact, the output of the means 419 for introducing a guard interval may be coupled to a respective transmit antenna 425 via a number of further means associated with either digital and analog signal processing, such as filtering, amplification, or the like.

In the following, the functionality of the apparatus in Fig. 4 will be explained.

The data at the input of the encoder 401 is firstly encoded. The encoder 401 may be a forward error correction encoder performing a read Solomon coding or a convolutional encoding (coding). After encoding, the encoded data at the output of the encoder 401 is (optionally) interleaved by the interleaver 403. The interleaver 403 may be a conventional interleaver having a matrix structure or a pseudo-random structure known to those skilled in the art. Alternatively, the output of the encoder 401 may be directly connected to the demultiplexer 405.

The demultiplexer 405 is formed to demultiplex the input signal such that the input signal is divided into S streams which are provided via the number of outputs of the demultiplexer 405. Optionally, each stream is interleaved by a corresponding interleaver 407.

Since the demultiplexer divides the decoded data stream (input signal) into S streams, wherein S denotes the number of sub-signals provided by the demultiplexer 405, the demultiplexer 405 may be formed as a serial-to-parallel (S/P) converter. Alternatively, other mappings are also possible. For example, the demultiplexer 405 may be operative to assign the successive discrete values of the input signal to the same stream.

The (interleaved) streams provided by the interleavers 407 are encoded by the encoders 409. The encoders 409 may be formed to differentially encode the respective sub-stream provided by the respective output of the interleaver 407 or, in case the interleavers 407 are bypassed, by the respective output of the multiplexer 405.

As mentioned above, the encoder 409 may perform differential encoding or differential modulation, e.g. differential phase-shift keying or differential amplitude phase-shift keying. The outputs of the encoders 409 provide S sub-signals to the assigner 411. The assigner 411 has a number of outputs, wherein each output is associated with a (discrete) carrier frequency used for signal transmission in the multicarrier transmission system shown in Fig. 4. The assigner 411 has $N_s$ outputs, wherein $N_s$ denotes the number of carrier frequencies. The assigner 411 provides the multicarrier signal to be transmitted via the number of outputs to the transformer 413 being operative to perform a frequency domain/time domain transform. For example, the transformer 413 may be operative to perform an inverse Fourier transform, an inverse discrete Fourier transform, an inverse fast Fourier transform or an inverse discrete Fourier transform, just to name a few transforms. Optionally, the transformer 413 may contain a parallel-to-serial converter (P/S), so that a transformed signal is provided via the output of the transformer 413 to the multiplying point 415.

At the multiplying point 415, a number of copies of the transformed signal to transmit the information included in the transformed signal via a number of transmit antennas is provided.

In the embodiment of Fig. 4, cyclic delay diversity is applied to introduce diversity by transmitting a number of signals via different antennas. Each copy of the transformed signal consists of a number of discrete values starting with a certain discrete value having a lowest numbering index of the number of discrete values. The means 422 for introducing the delay is operative to shift a copy of the copies of the transformed signal by reordering the discrete values such that the certain value becomes a numbering index greater than the lowest numbering index. In other words, the copy of the transformed signal to be delayed is cyclically shifted by a number of discrete values. In result, the copies of the transformed signal are cyclically shifted with respect to each other, i.e. each subsequent copy of the transformed signal is (cyclically) shifted (delayed) with respect to the previous copy.

Subsequently, the signals to be transmitted are provided to the respective means 419 for inserting the guard interval. If an OFDM transmission system is considered, then the means 419 is operative to append a number of last coefficients of the respective signal to be transmitted at its beginning, as it is known to those skilled in the art. The number of coefficients forming the guard interval is chosen such that the resulting guard interval has a duration which is not shorter than the maximum duration of the plurality of channels determined by the transmission path from one of the transmitting antennas 425 to a receiving point.

According to the present invention, the cyclic delay introduced by the means 422 can be chosen such that the channel coefficients of subcarriers with a fixed distance have a high correlation. In accordance with the present invention, the data is divided into S streams which are modulated separately, as depicted in Fig. 4. In accordance with the present invention, the modulated streams are transmitted over subcarriers (frequency carriers) with a high correlation. For example, for two transmit antennas, two paths are generated, i.e., the transformed signal is divided into two identical signals, a first and a second copy of the transformed signal. In this case, only one means 422 for introducing the delay may be applied in order to shift the second copy of the transformed signal with respect to the first copy.

Preferably, the cyclic delay is chosen such that it equals to $N_s/2$, where $N_s$ is the number of subcarriers. In this case, only two streams may be generated. One stream is for example transmitted over the even numbered subcarriers, the other stream is then transmitted over odd numbered subcarriers. In this case, it may be necessary to transmit one additional reference symbol required for the second stream in order to correctly apply a differential demodulation or decoding scheme at the receiver.

In the following, the cyclic approach with respect to the inventive concept will be described in detail, wherein a multiple-input-multiple-output (MIMO) channel with $N_T$ transmit antennas and $N_R$ receive antennas will be considered.

An impulse response from transmit antenna n to receive antenna m at time t is given by the $1 \times N_s$ vector

$$\mathbf{h}_t^{(nm)} = \left[ h_t^{(nm)}(0), \ h_t^{(nm)}(1), \ \ldots, \ h_t^{(nm)}(D), \ 0, \ \ldots, \ 0 \right],$$

wherein D denotes a memory of the channel.

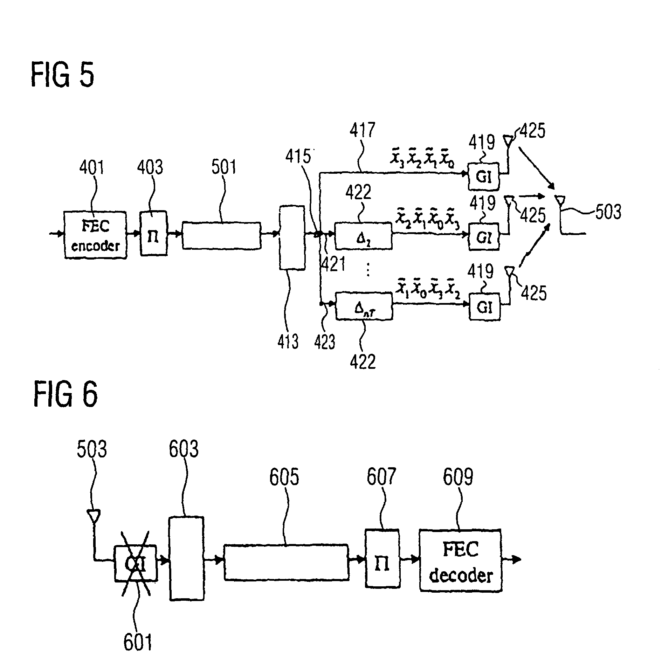

In order to explain the principle of cyclic delay diversity, reference is made to Fig. 5.

The apparatus in Fig. 5 shows the encoder 401 coupled to the interleaver 403. The output of the interleaver 403 is coupled to the inventive apparatus 501 for providing the multicarrier signal. Compared to the embodiment shown in Fig. 4, the inventive apparatus 501 includes the demultiplexer 405, the number of interleavers 407, the number of encoders 409 and the assigner 411. The multicarrier signal is provided to the transformer 413. The transformed signal is multiplied at the multiplying point 415 into a number of copies of the transformed signal, the number of copies corresponding to the number of transmit antennas 425.

As depicted in Fig. 5, the signal provided via the signal path 417 is identical to the transformed signal provided by the transformer 413. Due to the shift introduced by the means 422, the copy of the transformed signal provided via the signal path 421 is shifted by one coefficient.

Accordingly, the copy of the transformed signal corresponding to the signal path 423 is shifted by one coefficient with respect to the shifted copy corresponding to the signal path 421. As depicted in Fig. 5, the means 422 for introducing the delay are respectively operative to perform a left-shift. Alternatively, the means 422 may be operative to perform a right-shift. Moreover, a number of coefficients, the signals are shifted by, is variable and may be greater than 2.

Generally, the data is encoded by for example a forward error correcting encoder FEC 401 and interleaved. After the (optional) interleaver 403, the code bits are modulated, e.g. on QAM (QAM=quadrature amplitude modulation) or PSK (PSK= phase shift keying) symbols. OFDM is then implemented by using the transformer 413 being operative to perform the inverse fast Fourier transform (IFFT) of size $N_s$, where $N_s$ is the number of subcarriers. The output symbols of the IFFT 413 are denoted by $\tilde{x}_t$, $t = 0, \ldots, N_s - 1$. Each antenna introduces a different cyclic delay $\Delta_n$, $n = 1,\ldots,n_T$, i.e. the transmit symbol from antenna in a time t is given by

$$x_t^{(n)} = \tilde{x}_{(t-\Delta_n) \bmod N_s}, \ t = 0, \ldots, N_s - 1, n = 1, \ldots n_T..$$

Prior to transmission, a cyclic guard interval (GI) is included by the respective means 419 at each transmit antenna.

The system of Fig. 5 is equivalent to the transmission of the sequence $\tilde{x} = \llcorner \tilde{x}_0, \ldots, \tilde{x}_{N_s-1} \lrcorner$ over a frequency-selective channel with one transmit antenna yet impulse response given by

$$\mathbf{h}_{equ,t}^{(1m)} = \left[ h_{equ,t}^{(1m)}(0), \ \ldots, \ h_{equ,t}^{(1m)}(N_s - 1) \right]$$

to receive antenna m, m = 1, ..., $n_R$, with

$$h_{equ,t}^{(1m)}(d) = \sum_{n=1}^{n_T} h_t^{(nm)}\left((d - \Delta_n) \bmod N_s\right).$$

As depicted in Fig. 5, the transmit antennas 425 transmit signals to the receive antenna 503 considered above.

Fig. 6 shows a corresponding OFDM-receiver structure having the receive antenna 503 at which received signals are impinging. The received signals are then provided via a plurality of further processing means not depicted in Fig. 6 to a means 601 for removing the guard interval. The means 601 for removing the guard interval is coupled to a timefrequency transformer 603 inoperative to perform a fast Fourier transform (FFT). The transformed signals at an output of the transformer 603 are provided to a means 605 for demodulating. The means 605 for demodulating is coupled to the interleaver 607 having an output connected to a forward error correction decoder 609. Particularly, the means 605 for demodulating is operative to perform operations inverse to those performed in the transmitter.

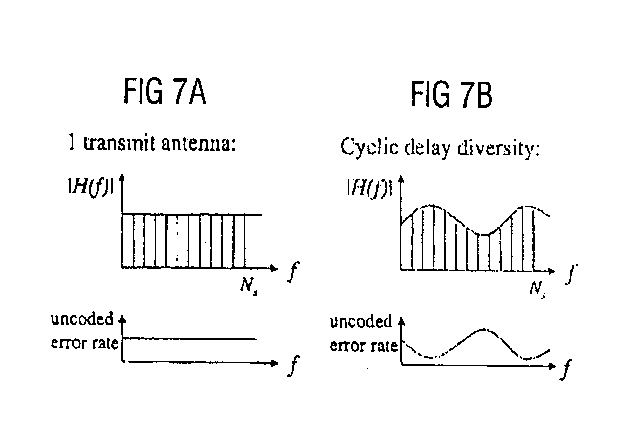

Basically, the cyclic delay diversity transforms the multiple-input-multiple-output (MIMO) channel to a single-input-multiple-output (SIMO) channel having an increased frequency selectivity, i.e. the spatial diversity is transformed to frequency diversity. This effect is demonstrated in Fig. 7a and 7b.

In the upper diagram of Fig. 7a, an absolute value of the channel coefficients H(f) over a frequency is shown, wherein a flat fading channel scenario is considered. In the lower diagram of Fig. 7a, a corresponding uncoded error rate over a frequency is depicted. Since in Fig. 7a a flat fading channel is considered, the uncoded error rate follows, by the way of example only, a vertical line over frequency.

In Fig. 7b, the transformation introduced by the cyclic delay diversity is demonstrated.

In the upper diagram of Fig. 7b, an absolute value of the channel coefficients is shown over frequency. Obviously, the channel has been transformed from a flat fading channel to a frequency selective channel having coefficients with increased energy and coefficients with decreased energy. The corresponding uncoded error rate is shown in the lower diagram of Fig. 7b. As can be seen, the uncoded (bit) error rate is not constant over the subcarriers. However, the average bit error rate for an uncoded transmission will be the same as in the case of a flat fading channel considered in Fig. 7a. Nevertheless, an outer forward error correction decoder can pick up the available frequency diversity.

As described above, the standard approaches suffer from the fact, that due to increased frequency-selectivity more pilot symbols are required for channel estimation, which reduces the bandwidth efficiency. In order to the increase the bandwidth efficiency compared to the standard approaches described above, the inventive concept relies on a differential modulation which can be detected non-coherently. Since the information is coded in the difference of two successive modulated symbols, a non-coherent demodulator requires, that, ideally, the channel does not vary during transmission of two successive symbols.

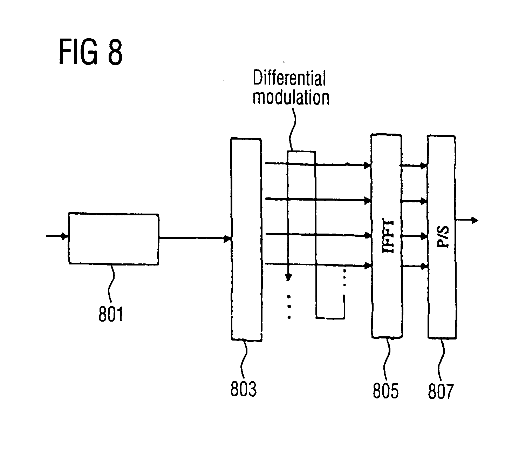

In most applications the channel can be assumed to be approximately time-invariant for each subcarrier during transmission of two successive OFDM symbols. Therefore, separate differential modulation on each subcarrier can be applied. However, a reference symbol has to be transmitted in advance on each subcarrier, i.e. the first OFDM symbol contains only reference symbols, which is a significant overhead, particularly in a 4G mobile radio system, where a large number of subcarriers and a relatively small number of OFDM symbols per frame is expected. In order to cope with this problem, a differential modulation in frequency direction can be applied in accordance with the present invention. For example, the differentially modulated symbols are transmitted on neighboring or on non-neighboring subcarriers, as depicted in Fig. 8 by the arrow.

In Fig. 8, a further embodiment of the inventive apparatus is shown.

The apparatus of Fig. 8 comprises the inventive processor 801 being operative in accordance with the above descriptions. As is shown in Fig. 8, the processor 801 has an output for serially providing the number of sub-signals to an assigner 803 in accordance with the present invention. The assigner 803 has a number of outputs for providing a multicarrier signal to a transformer 805. The transformer 805 has a number of outputs coupled to a parallel-to-serial converter (P/S) 807. The P/S converter 807 has an output for providing a serial signal to be transmitted.

The processor 801 may be operative to provide differentially modulated (or differentially encoded) sub-symbols. Due to differential modulation in frequency direction, only one reference symbol per frame is required in order to perform channel estimation in the receiver. Hence, the assigner 803 may be operative to assign the reference symbol to the corresponding subcarrier for channel estimation purposes as depicted by the arrow shown in Fig. 8. In other words, the assigner 803 performs a mapping such that reference symbols are mapped onto the corresponding carrier frequencies associated with the channel coefficients to be estimated.

However, due to cyclic delay diversity, the channel coefficients $H_k^{(m)}(d)$ of neighboring subcarriers may have a low correlation. A resulting channel coefficient of the d-th subcarrier at receive antenna m k-th OFDM symbol is given by

$$H_k^{(m)}(d) = \sum_{n=1}^{n_T} H_k^{(nm)}(d)e^{j2\pi nd\Delta_n / N_s}, \; d = 0, \ldots, N_s - 1, \; m = 1, n_R,$$

wherein

$$H_k^{(nm)} = \left[ H_k^{(nm)}(0), \ldots, H_k^{(nm)}(N_s) \right]$$

a Fourier transform of the impulse response of the channel.

For $n_T = 2$ transmit antennas and a cyclic delay $\Delta_2 = \dfrac{N_s}{2}$ follows

$$H_k^{(m)}(d) = H_k^{(1m)}(d) + H_k^{(2m)}(d), \text{ d even}$$

$$H_k^{(m)}(d) = H_k^{(1m)}(d) - H_k^{(2m)}(d), \text{ d odd} .$$

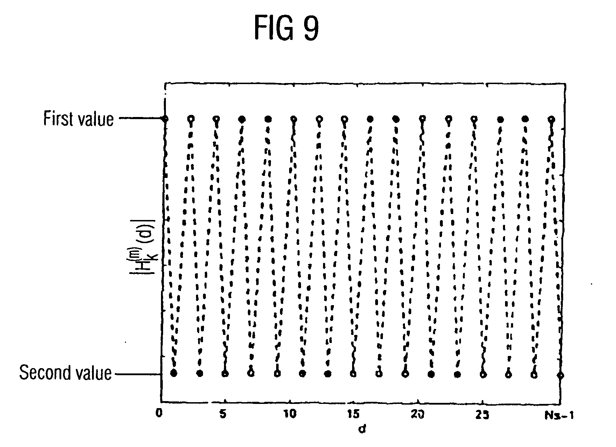

Fig. 9 demonstrates a resulting channel frequency response for a cyclic delay diversity with two transmit antennas and the cyclic delay $\Delta_2 = \dfrac{N_s}{2}$ in the case of a flat fading channel. As can be seen from Fig. 9, the absolute values of the resulting channel frequency response alternate between a first value and a second value, wherein the second value is smaller than the first value.

Given the correlation matrix

$$R^{(m)} = E\left\{ H_k^{(m)H} H_k^{(m)} \right\},$$

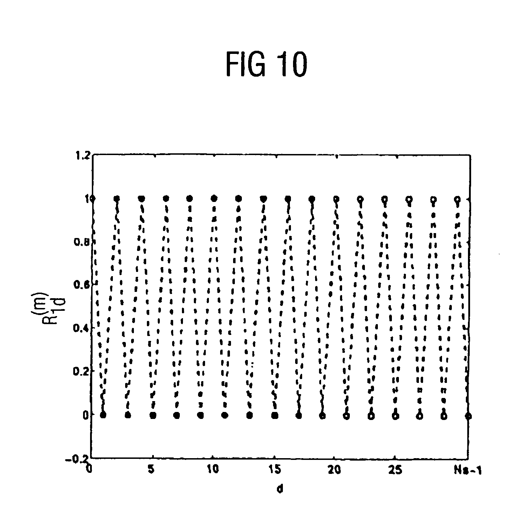

the associated correlation function $R_{1d}^{(m)}$ for a first subcarrier is shown in Fig. 10. It can be seen, that the values of the correlation function vary between 0 (characterizing non-correlated channel coefficients, wherein '1' denotes a relative value) and 1 (characterizing fully-correlated channel coefficients). Hence, the channel coefficients of every other sub-carrier are correlated whereas neighboring subcarriers are uncorrelated. Consequently, a standard differential modulation in frequency direction without considering these effects will fail.

The characteristics of the correlation function shown in Fig. 10 demonstrates the inventive concept for avoiding the problems described above. For example, in the case of two antennas, the data can be divided into two streams, which are separately differentially modulated. One of the stream is then transmitted over the even numbered subcarriers, the other one is transmitted over the odd numbered subcarriers, so that the values of the corresponding stream are always transmitted via correlated carriers, e.g. via carrier frequencies associated with correlated channel coefficients in a frequency domain.

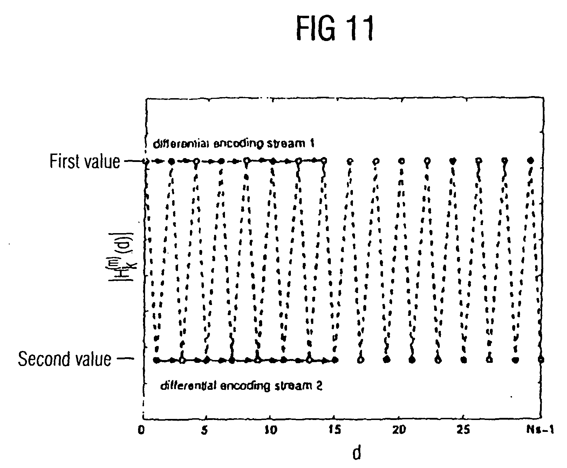

This concept is demonstrated in Fig. 11 showing the channel coefficients of Fig. 9. It is additionally indicated, that channel coefficients having absolute values approaching the first value determine carrier frequencies applied to transmission of differentially encoded stream 1. Accordingly, the channel coefficients having absolute values approaching the second value determine the carrier frequencies applied to transmission the differentially encoded stream. As mentioned above, an additional reference symbol may be required for the second stream (stream 2) for channel estimation purposes.

Similar results can be obtained for a frequency selective channel, as will be explained in the following.

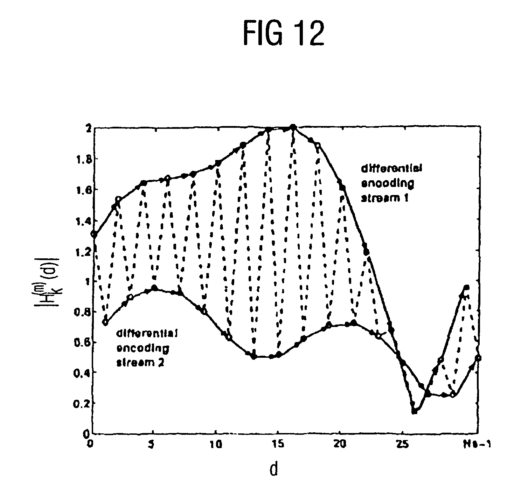

Fig. 12 demonstrates a differential encoding scheme with two streams for cyclic delay diversity with two transmit antennas and a cyclic delay according to $\Delta_2 = \dfrac{N_s}{2}$ in the case of a frequency selective channel. In contrast to the flat fading channel considered in Fig. 11, the absolute values of the channel coefficients vary with increasing frequency. However, for the above mentioned cyclic delay diversity, every second channel coefficient is correlated.

Hence, every second carrier may be applied to transmission of the differentially encoded stream 1, and every second carrier may be applied to transmission of the differentially encoded stream 2.

The absolute values of the frequency response depicted in Fig. 12 are determined by a channel with D+1 = 3 independently fading taps $h_t^{(nm)}(d)$ with equal mean power from each transmit to each receive antenna. Due to the frequency selectivity of the original channel (i.e. channel without diversity effects), the channel taps $H_k^{(m)}(d)$ of every other subcarrier are not identical anymore. However, if the original channel is approximately constant over three neighboring subcarriers, then the same differential modulation strategy as for the flat fading channels can be applied.

If a cyclic delay of e.g. $\Delta_2 = \dfrac{N_s}{4}$ is chosen, then the term $e^{j2\pi d\Delta_n/N_s}$ can take four different values, i.e. in a flat channel four different channel states of the resulting frequency domain channel $H_k^{(m)}$ can be observed. Therefore, four separate differentially modulated stream can be used. Generally, the number of streams is given by the number S of different channel states $H_k^{(m)}(d)$ which result from the above formula for a flat fading channel, i.e. $H_k^{(m)}(d)$ = const $\forall\ d = 0,...,N_s$ -1.

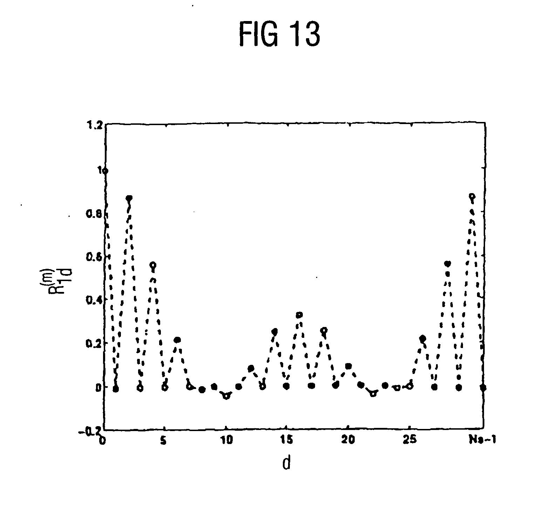

Fig. 13 shows a correlation function $R_{1d}$ for cyclic delay diversity with two transmit antennas and cyclic delay $\Delta_2 = \dfrac{N_s}{2}$ for the frequency selective channel of Fig. 12. It can be seen, that the correlation function has the values characterizing the correlated channel coefficients, wherein these values are greater than the values of the correlation function characterizing the uncorrelated channel coefficients.

Up to this point, the inventive apparatus for providing a multicarrier signal was considered in a context of cyclic delay diversity introduced in the transmitter. However, the inventive concept may also be applied when another diversity schemes are used since the inventive approach is based on a pre-processing of signals to be transmitted in order to take the effects associated with the applied diversity scheme into account. For example, the diversity may also be introduced by introducing a phase-shift to the multicarrier signal prior to frequency/time transformation. Hence, for an $N_T$ antenna system, $N_T$ frequency domain/time domain transformations may have to be performed.

The inventive concept may further be applied in the case of a phase diversity. In order to introduce phase diversity, the inventive apparatus may further comprise a further means for generating a copy of the multicarrier signal required for the subsequent phase-shift. Hence, the phase-shifted signal is derivable from the multicarrier signal by a phase-shift. The frequency domain/time domain transformer transforms then the signal derivable from the multicarrier signal into a transformed signal in a straight forward way, as described above.

As mentioned above, in order to provide the signal derivable from the multicarrier signal, the inventive apparatus may comprise a means for providing the signal including a means for providing a copy of the multicarrier signal and a means for phase-shifting the copy of the multicarrier signal for providing the signal derivable from the multicarrier signal.

At the receiver, preferably a plurality of receive antennas is used for signal reception. Generally, after removing the guard interval in the case of OFDM transmission, a time domain/frequency domain transform may be applied for each signal corresponding to each receive antenna for providing a corresponding received multicarrier signal.

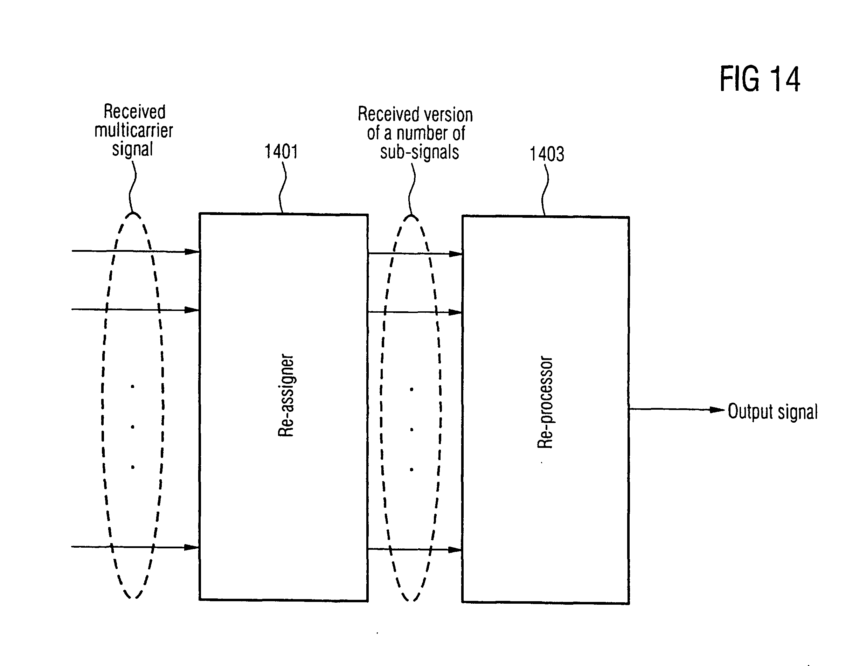

Fig. 14 shows a block diagram of an inventive apparatus for providing an output signal from a received multi-carrier signal resulting from a signal received by one or a plurality of receive antennas. In the case of a multicarrier transmission scheme, for example an ODFM scheme, the received multicarrier signal includes spectral coefficients for carrier frequencies of a multicarrier scheme. The spectral coefficients may be formed from an input signal processing the input signal for obtaining a number of sub-signals consisting of successive discrete values, wherein the number of sub-signals collectively have the same information as the input signal, wherein the number of sub-signals is equal two or greater than two. The input signal may further be formed by assigning the discrete values of the number of sub-signals to successive carrier frequencies to obtain a multicarrier signal, wherein successive discrete values of a first sub-signal are assigned to every $S^{th}$ carrier frequency starting with a first carrier frequency, and wherein successive discrete values of a second sub-signal were assigned to every $S^{th}$ carrier frequency starting with a second carrier frequency, wherein the second carrier frequency is different from the first carrier frequency and S denotes a number equal to or greater than the number of sub-signals.

The received multicarrier signal may for example be generated by a transmitter including the inventive apparatus described above.

The apparatus for providing the output signal comprises a re-assigner 1401 having a number of inputs and a number of outputs. The outputs of the re-assigner 1401 are coupled to a re-processor 1403 having an output for providing the output signal.

In the following, the functionality of the apparatus shown in Fig. 14 will be explained.

The re-assigner 1401 is formed for performing an operation which is inverse to the assigner operation described above. In particular, the spectral coefficients may be associated with numbering indices of a set of numbering indices. The re-assigner is operative to select every $S^{th}$ spectral coefficient starting with a spectral coefficient having a first numbering index for providing a received version of a first sub-signal of the number of sub-signals. Additionally, the assigner selects every $S^{th}$ spectral coefficient starting with a spectral coefficient having a second numbering index for providing a received version of a second sub-signal of the number of sub-signals, wherein the first numbering index is different from the second numbering index. S denotes the number of sub-signals.

The re-assigner 1401 may be a mapper mapping the spectral coefficients to a received version of a respective sub-signal of the number of sub-signals. For example, the re-assigner 1401 may be an interleaver or a block-interleaver having a matrix structure. For example, the re-assigner 1401 is a block-interleaver having S columns and a number of rows determined by a division of a number of carrier frequencies of the multicarrier scheme by S or vice versa, as discussed above in connection with the inventive assigner.

The received version of a number of sub-signals is provided via the outputs of the re-assigner 1401 to the re-processor 1403. The re-processor 1403 may perform an operation inverse to that explained in connection with the inventive processor implemented in the transmitter. If, at the transmitter, the number of sub-signals is formed by dividing the input signal into the number of sub-signals, the number being equal two or greater than two, and by decoding each of the divided signals for obtaining the number of sub-signals, then the re-processor 1403 may comprise means for separately decoding the received sub-signals for providing a number of decoded received sub-signals. In this case, the received sub-signals are provided by the re-assigner 1401 as the received version of the number of sub-signals. Additionally, the re-processor 1403 may comprise means for combining the number of decoded sub-signals for obtaining the received version of the input signal as the output signal. Preferably, the means for combining may be a demultiplexer demultiplexing the number of decoded sub-signals into the output signal stream.

If, at the transmitter, the divided signals are coded by combining two divided signal values for obtaining a sub-signal value, the means for decoding comprised by the inventive re-processor 1403 may be operative, for a received sub-signal, to combine two received sub-signal values for providing a decoded received sub-signal value. Particularly, if the divided signals are differentially coded, the means for decoding may further comprise, for a received sub-signal, a differential decoder performing an operation inverse to the one associated with encoding (coding). Furthermore, the means for re-processing may comprise, for a decoded received sub-signal the interleaver for providing the interleaved decoded received sub-signal as the decoded received sub-signal, if, at the transmitter, interleaving is used. The number of decoded received sub-signals may be further multiplexed into a multiplexed received signal as the output signal by a multiplexer comprised by the means for combining, as explained above.

Generally, the inventive apparatus may be arranged for receiving another multicarrier signal having the same information content as the multicarrier signal. In this case, the inventive re-assigner may be further operative to reassign the another received multicarrier signal to obtain another received version of the number of sub-signals. In this case, the re-processor may be adapted to additionally use the another received version of the number of sub-signals, when providing the output signal.

The re-processor may be further arranged to output soft values for the successive values of the output signal, as mentioned above.

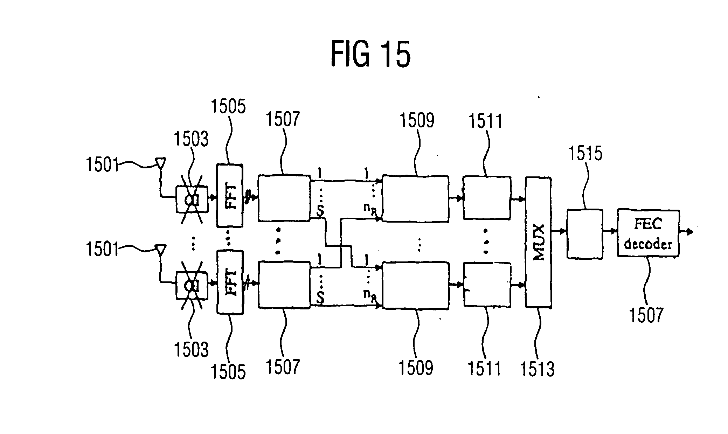

Fig. 15 shows a block diagram of an inventive receiver structure for cyclic delay diversity with multi-stream differential modulation.

The apparatus of Fig. 15 comprises a number of receive antennas 1501 determining the respective received signal path. The signals received via the respective antenna 1501 are provided to a respective means 1503 for removing the guard interval associated with an OFDM modulation scheme. Each of the means 1503 for removing the guard interval has an output connected to a time/frequency transformer 1505. The transformer 1505 may be operative, by the way of example only, to perform a fast Fourier transform (FFT), a discrete fast Fourier transform, a discrete Fourier transform, or any other time domain/frequency domain transform.

Each of the transformers 1505 has a number of outputs connected to a respective re-assigner 1507 associated with the considered signal path. Each of the inventive re-assigner 1507 has a number of outputs determined by the number of sub-signals S. In total, $n_R$ re-assigner 1507 are used, wherein $n_R$ denotes a number of the receive antennas 1501. After the re-assigner 1507, S decoders 1509 are arranged. Each of the processors 1509 has $n_R$ inputs for receiving $n_R$ received versions of a sub-signal. To be more specific, each of the number of the inputs of each of the decoder 1509 is connected to different re-assigners 1507 for collecting $n_R$ received versions of the same sub-signal. Each of the decoders 1509 have an output connected to the interleaver 1511, wherein each of the interleavers 1511 has an output coupled to a multiplexer 1513. The multiplexer 1513 (MUX) has an output connected to an interleaver 1515 having an output coupled to a forward error correction decoder 1517 (FEC decoder).

In the following, the functionality of the apparatus shown Fig. 15 will be explained.

As mentioned above, the inventive receiver is equipped with $n_R$ antennas 1501. The re-assigner 1507, assigns the $n_R$ received signals of each stream to the respective decoder 1509. After the interleaving performed by the (optional) interleavers 1511 and 1515 the forward error correction decoder 1517 picks up the frequency diversity and delivers soft or hard decisions on the information bits.

The decoder 1509 may be a differential decoder or differential demodulator in order to extract the differentially encoded/modulated information.

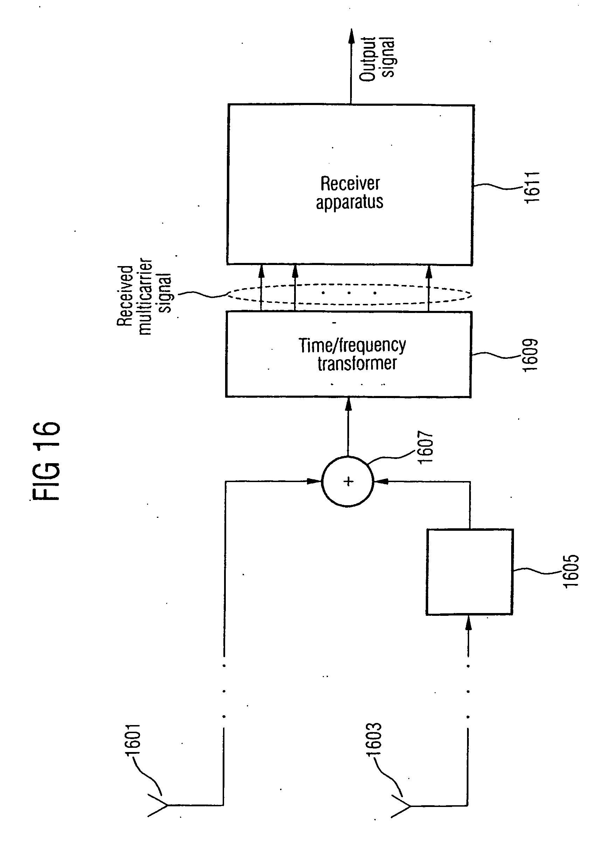

The structure of Fig. 15 is suited for receiving signals, wherein, in the transmitter, for example a cyclic delay diversity scheme was applied. However, the inventive receiving concept may also be applied, when the diversity is introduced in the receiver due to the linearity of the diversity operation. This scenario is considered in Fig. 16.

The receiver structure shown in Fig. 16 comprises, by the way of example only, a first receive antenna 1601 and a second receive antenna 1603. The first receive antenna 1601 defines a first signal path and the second receive antenna 1603 defines a second signal path. The second signal path is coupled to a means 1605 for introducing a delay having an output. Both, the output of means 1605 and the first signal path associated with the first receive antenna 1601 are coupled to an adder 1607. The adder 1607 has an output connected to a time/frequency transformer 1609, the time/frequency transformer 1609 having a number of outputs. The number of outputs of the time/frequency transformers 1609 is coupled to a receiver apparatus 1611 in accordance with the present invention. The receiver apparatus 1611 has an output for providing the output signal.

The adder 1607 provides via the output a received signal which is a superposition of a first signal corresponding to a signal received by the first receive antenna 1601 and a cyclically shifted version of a second signal corresponding to a signal received by the second receive antenna 1603. The (cyclic) shift or delay is introduced by the means 1605 operating in a similar way as described above in connection with the cyclic delay diversity introduced in the transmitter.

Up to this point it was assumed, that the uncorrelated channel coefficients are known at the receiver. However, if the receiver does not have any information about the correlation properties of the coefficients of the frequency domain channel response, the covariance (or the correlation) function of same may have to be performed. To do so, the inventive receiver apparatus may further comprise a correlator for performing a correlation function of the received multicarrier signal. The correlator may be operative to determine a correlation function of the received multicarrier signal. Since the uncorrelated channel coefficients directly affect the correlation properties between the carrier frequencies, such a correlator directly determines the correlation characteristics of the multicarrier signal, and hence of the channel coefficients.

Depending on certain implementation requirements of the inventive method for providing a multicarrier signal or for providing an output signal from a received multicarrier signal can be implemented in hardware or in software. The implementation can be performed using a digital storage medium, in particular a disc or a CD having electronically readable control signals stored thereon, which can cooperate with a programmable computer system such that the inventive method are performed. Generally, the present invention is, therefore, a computer-program product with a program code stored on a machine-readable carrier, the program code performing the inventive method, when the computer-program product runs on a computer. In other words, the inventive methods are, therefore, a computer-program having a program code for performing the inventive methods, when the computer program runs on a computer.

**Claims**

1. Apparatus for providing a multicarrier signal to be transmitted from a transmitting point to a receiving point via a plurality of carrier frequencies, comprising:

   a processor (101) for processing an input signal for obtaining a number of sub-signals consisting of successive discrete values, wherein the number of sub-signals collectively have the same information as the input signal, the number of sub-signals being equal to or greater than two, wherein the processor comprises a divider (201) for dividing the input signal into a number of divided signals, the number of divided signals being equal to the number of sub-signals, and , for each divided signal, a differential encoder (203; 409) configured for differentially, individually and separately encoding the respective divided signal to obtain a sub-signal of the number of sub-signals;

   an assigner (103, 411) for assigning the discrete values of the number of sub-signals to successive carrier frequencies to obtain a multicarrier signal;

wherein the assigner (103, 411) is operative to assign successive discrete values of a first sub-signal to every $S^{th}$ carrier frequency starting with a first carrier frequency, and to assign successive discrete values of a second sub-signal to every $S^{th}$ carrier frequency starting with a second carrier frequency, wherein the first carrier frequency is different from the second carrier frequency.

2. Apparatus according to claim 1, wherein the divider (201) comprises:

a demultiplexer (405) for demultiplexing the input signal into a number of demultiplexed signals;
for a demultiplexed signal of the number of the demultiplexed signals, an interleaver (407) for providing an interleaved version of the demultiplexed signal as a divided signal.

3. Apparatus according to anyone of the claims 1 to 2, further comprising an interleaver (403) having an output, the output being coupled to an input of the processor.

4. Apparatus according to anyone of the claims 1 to 3,
wherein the successive carrier frequencies are associated with numbering indices of a set of successive numbering indices,
wherein the first carrier frequency is associated with a first numbering index, the first numbering index being equal to or greater than a lowest numbering index in the set of successive numbering indices, and
wherein the second carrier frequency is associated with a second numbering index of the set of successive numbering indices,
wherein the second numbering index differs from the first numbering index, and
wherein the assigner (103, 411) is operative to assign the discrete values of the first sub-signal to every $S^{th}$ carrier frequency and to assign the discrete values of the sub-signal to every $S^{th}$ carrier frequency by assigning the respective discrete values to respective numbering indices.

5. Apparatus according to anyone of the claims 1 to 4,
wherein the assigner (103, 411) is a block-interleaver having S rows and a number of columns determined by a division of the number of carrier frequencies by S, or
a block-interleaver having S columns and a number of rows determined by the division of the number of carrier frequencies by S.

6. Apparatus according to anyone of the claims 1 to 5, further comprising a transformer (413; 808) for transforming the multicarrier signal and/or a signal derivable from the multicarrier signal into a transformed signal by applying a time/frequency transform to the multicarrier signal or to the signal derivable from the multicarrier signal.

7. Apparatus according to claim 6, further comprising:

a means (415) for providing a copy of the transformed signal;
a means (422) for introducing a delay to the copy of the transformed signal;

wherein the copy of the transformed signal has a number of discrete values starting with a certain discrete value having a lowest numbering index of the number of discrete values, and
wherein the means (422) for introducing the delay is operative to shift the copy of the transformed signal by reordering the discrete values such that the certain value becomes a numbering index greater than the lowest numbering index.

8. Apparatus according to claim 6 or 7, further comprising a means for providing the signal derivable from the multicarrier signal, the means for providing comprising:

a means for providing a copy of the multicarrier signal;
a means for phase-shifting the copy of the multicarrier signal for providing the signal derivable from the multi-carrier signal.

9. Receiver apparatus for providing an output signal from a received multicarrier signal, wherein the received multicarrier signal includes spectral coefficients for carrier frequencies of a multicarrier scheme, the spectral coefficients being formed from an input signal by processing the input signal for obtaining a number of sub-signals consisting of successive discrete values, wherein the number of sub-signals collectively have the same information as the input signal, the number of sub-signals being equal to or greater than two, and by assigning the discrete values of the number of sub-signals to successive carrier frequencies to obtain a multicarrier signal, wherein successive discrete values of a first sub-signal are assigned to every $S^{th}$ carrier frequency starting with a first carrier frequency, and wherein successive discrete values of a second sub-signal are assigned to every $S^{th}$ carrier frequency starting with a second carrier frequency, wherein the second carrier frequency is different from the first carrier frequency and wherein S denotes a number being equal to or greater than the number of sub-signals, the receiver apparatus comprising:

> a re-assigner (1401, 1507) for re-assigning the spectral coefficients, the re-assigner being operative to provide a received version of the number of sub-signals; and
> a re-processor (1403) for re-processing the received version of the number of sub-signals to obtain a received version of the input signal as the output signal, wherein the re-processor (1403) comprises:

>> means for separately decoding the received version of the number of sub-signals for providing a number of decoded received sub-signals, wherein the means for decoding comprises, for each received sub-signal, a differential decoder (1509); and
>> means for combining the number of decoded received sub-signals for obtaining the received version of the input signal as the output signal.

**10.** Receiver apparatus according to claim 9, wherein the spectral coefficients are associated with numbering indices of a set of numbering indices,
wherein the re-assigner (1401, 1507) is operative to select every $S^{th}$ spectral coefficient starting with a spectral coefficient having a first numbering index for providing a received version of a first sub-signal of the number of sub-signals,
wherein the re-assigner (1401, 1507) is operative to select every $S^{th}$ spectral coefficient starting with a spectral coefficient having a second numbering index for providing a received version of a second sub-signal of the number of sub-signals, and
wherein the first numbering index differs from the second numbering index.

**11.** Receiver apparatus according to claim 9 or 10, wherein the re-assigner (1401, 1507) is a block-interleaver having S columns and a number of rows determined by a division of a number of carrier frequencies of the multicarrier scheme by S, or
wherein the re-assigner (1401, 1507) is a block-interleaver having S rows and a number of columns determined by the division of a number of carrier frequencies by S.

**12.** Receiver apparatus according to claims 9 to 11, wherein the means for re-processing comprises, for a decoded received sub-signal, a deinterleaver for providing a deinterleaved decoded received sub-signal as the decoded received sub-signal.

**13.** Receiver apparatus according to claims 9 to 12, wherein the means for combining comprises:

> a multiplexer (1503) for multiplexing the number of decoded received sub-signals into a multiplexed received signal as the output signal.

**14.** Receiver apparatus according to claim 13, comprising a further deinterleaver (1515) for deinterleaving the multiplexed received signal to obtain a demultiplexed signal as the output signal.

**15.** Receiver apparatus according to claims 9 to 14,
wherein the received multicarrier signal is formed from a received signal by a transformer for transforming the received signal into the received multicarrier signal, and
wherein the transformer (1505) is operative to perform a time/frequency transform.

**16.** Receiver apparatus according to claim 15, wherein the received signal is a superposition of a first signal corresponding to a signal received by a first receive antenna, and a shifted version of a second signal corresponding to a signal received by a second receive antenna, the shifted version being provided by a means for providing a shifted version.

**17.** Receiver apparatus according to claim 9, arranged for receiving another multicarrier signal having the same information content as the multicarrier signal, and

wherein the re-assigner (1401, 1507) is further operative to re-assign the another received multicarrier signal to obtain another received version of the number of sub-signals,

wherein the re-processor (1403) is adapted to additionally use the another received version of the number of sub-signals when providing the output signal.

18. Receiver apparatus according to claims 9 to 17, in which the re-processor is arranged to output soft values for the successive values of the signal output.

19. Method for providing a multicarrier signal to be transmitted from a transmitting point to a receiving point via a plurality of carrier frequencies, comprising the following steps:

processing an input signal for obtaining a number of sub-signals consisting of successive discrete values, wherein the number of sub-signals collectively have the same information as the input signal, the number of sub-signals being equal or greater than two, wherein the processing comprises dividing the input signal into a number of divided signals, the number of divided signals being equal to the number of sub-signals, and, for each divided signal, differentially, individually and separately encoding the respective a divided signal to obtain a sub-signal of the number of sub-signals;

assigning the discrete values of the number of sub-signals to successive carrier frequencies to obtain a multi-carrier signal;

wherein successive discrete values of a first sub-signal are assigned to every $S^{th}$ carrier frequency starting with a first carrier frequency, and wherein successive discrete values of a second sub-signal are assigned to every $S^{th}$ carrier frequency starting with a second carrier frequency,

wherein the second carrier frequency is different from the first carrier frequency; and

wherein S denotes a number being equal to or greater than the number of sub-signals.

20. Method for providing an output signal from a received multicarrier signal, wherein the received multicarrier signal includes spectral coefficients for carrier frequencies of a multicarrier scheme, the spectral coefficients being formed from an input signal by processing the input signal for obtaining a number of sub-signals consisting of successive discrete values, wherein the number of sub-signals collectively have the same information as the input signal, the number of sub-signals being equal or greater than two, and by assigning the discrete values of the number of sub-signals to successive carrier frequencies to obtain a multicarrier signal, wherein the successive discrete values of a first sub-signal are assigned to every $S^{th}$ carrier frequency starting with a first carrier frequency, and wherein successive discrete values of a second sub-signal are assigned to every $S^{th}$ carrier frequency starting with a second carrier frequency, wherein the second carrier frequency is different from the first carrier frequency, with following steps:

re-assigning the spectral coefficients, for providing a received version of the number of sub-signals; and

re-processing the received version of the number of sub-signals to obtain a received version of the input signal as the output signal, wherein the re-processing comprises separately differentially decoding each of the received versions of the number of sub-signals for providing a number of decoded received sub-signals, and combining the number of decoded sub-signals for obtaining the received version of the input signal as the output signal.

21. Computer program having a program code adapted to perform the method in accordance with claim 19 or adapted to perform the method in accordance with claim 20, when the program runs on a computer.

**Patentansprüche**

1. Vorrichtung zum Bereitstellen eines Mehrträgersignals, das über eine Mehrzahl von Trägerfrequenzen von einem Sendepunkt zu einem Empfangspunkt gesendet werden soll, die folgende Merkmale umfasst:

einen Prozessor (101) zum Verarbeiten eines Eingangssignals zum Erhalten einer Anzahl von Untersignalen, die aus aufeinanderfolgenden einzelnen Werten bestehen, wobei die Anzahl von Untersignalen gemeinsam die gleichen Informationen aufweisen wie das Eingangssignal, wobei die Anzahl von Untersignalen gleich oder größer 2 ist, wobei der Prozessor einen Teiler (201) zum Teilen des Eingangssignals in eine Anzahl von geteilten Signalen umfasst, wobei die Anzahl von geteilten Signalen gleich der Anzahl von Untersignalen ist, und für jedes geteilte Signal einen Differenzcodierer (203; 409), der konfiguriert ist zum differentiellen, individuellen und getrennten Codieren des jeweiligen geteilten Signals, um ein Untersignal der Anzahl von Untersignalen zu erhalten;
eine Zuweisungseinrichtung (103, 411) zum Zuweisen der einzelnen Werte der Anzahl von Untersignalen zu aufeinanderfolgenden Trägerfrequenzen, um ein Mehrträgersignal zu erhalten;

wobei die Zuweisungseinrichtung (103, 411) wirksam ist, um aufeinanderfolgende einzelne Werte eines ersten Untersignals jeder S-ten Trägerfrequenz, beginnend mit einer ersten Trägerfrequenz, zuzuweisen, und um aufeinanderfolgende einzelne Werte eines zweiten Untersignals jeder S-ten Trägerfrequenz, beginnend mit einer zweiten Trägerfrequenz, zuzuweisen, wobei sich die erste Trägerfrequenz von der zweiten Trägerfrequenz unterscheidet.

2. Vorrichtung gemäß Anspruch 1, bei der der Teiler (201) folgendes Merkmal umfasst:

einen Demultiplexer (405) zum Demultiplexen des Eingangssignals in eine Anzahl von demultiplexten Signalen;
für ein demultiplextes Signal der Anzahl der demultiplexten Signale, eine Verschachtelungseinrichtung (407) zum Bereitstellen einer verschachtelten Version des demultiplexten Signals als ein geteiltes Signal.

3. Vorrichtung gemäß einem der Ansprüche 1 bis 2, die ferner eine Verschachtelungseinrichtung (403) umfasst, die einen Ausgang aufweist, wobei der Ausgang mit einem Eingang des Prozessors gekoppelt ist.

4. Vorrichtung gemäß einem der Ansprüche 1 bis 3, bei der die aufeinanderfolgenden Trägerfrequenzen Nummerierungsindizes eines Satzes von aufeinanderfolgenden Nummerierungsindizes zugeordnet sind,
wobei die erste Trägerfrequenz einem ersten Nummerierungsindex zugeordnet ist, wobei der erste Nummerierungsindex gleich oder größer ist als ein niedrigster Nummerierungsindex in dem Satz von aufeinanderfolgenden Nummerierungsindizes, und
wobei die zweite Trägerfrequenz einem zweiten Nummerierungsindex des Satzes von aufeinanderfolgenden Nummerierungsindizes zugeordnet ist,
wobei sich der zweite Nummerierungsindex von dem ersten Nummerierungsindex unterscheidet, und
wobei die Zuweisungseinrichtung (103, 411) wirksam ist, um die einzelnen Werte des ersten Untersignals jeder S-ten Trägerfrequenz zuzuweisen, und die einzelnen Werte des Untersignals jeder S-ten Trägerfrequenz zuzuweisen, durch Zuweisen der jeweiligen einzelnen Werte zu jeweiligen Nummerierungsindizes.

5. Vorrichtung gemäß einem der Ansprüche 1 bis 4, bei der die Zuweisungseinrichtung (103, 411) eine Blockverschachtelungseinrichtung ist, die S Zeilen und eine Anzahl von Spalten aufweist, die durch eine Teilung der Anzahl von Trägerfrequenzen durch S bestimmt werden, oder
eine Blockverschachtelungseinrichtung, die S Spalten und eine Anzahl von Zeilen aufweist, die durch die Teilung der Anzahl von Trägerfrequenzen durch S bestimmt werden.

6. Vorrichtung gemäß einem der Ansprüche 1 bis 5, die ferner einen Transformator (413; 808) zum Transformieren des Mehrträgersignals und/oder eines Signals, das von dem Mehrträgersignal ableitbar ist, in ein transformiertes Signal umfasst, durch Anlegen einer Zeit/Frequenz-Transformation an das Mehrträgersignal oder das Signal, das von dem Mehrträgersignal ableitbar ist.

7. Vorrichtung gemäß Anspruch 6, die ferner folgende Merkmale umfasst:

eine Einrichtung (415) zum Bereitstellen einer Kopie des transformierten Signals;
eine Einrichtung (422) zum Einführen einer Verzögerung in die Kopie des transformierten Signals;

wobei die Kopie des transformierten Signals eine Anzahl von einzelnen Werten aufweist, beginnend mit einem bestimmten einzelnen Wert, der einen niedrigsten Nummerierungsindex der Anzahl von einzelnen Werten aufweist, und
wobei die Einrichtung (422) zum Einführen der Verzögerung wirksam ist, um die Kopie des transformierten Signals durch Neuordnen der einzelnen Werte zu verschieben, so dass der bestimmte Wert ein Nummerierungsindex wird, der größer ist als der niedrigste Nummerierungsindex.

8. Vorrichtung gemäß Anspruch 6 oder 7, die ferner eine Einrichtung zum Bereitstellen des Signals umfasst, das von dem Mehrträgersignal ableitbar ist, wobei die Einrichtung zum Bereitstellen folgende Merkmale umfasst:

eine Einrichtung zum Bereitstellen einer Kopie des Mehrträgersignals;
eine Einrichtung zum Phasenverschieben der Kopie des Mehrträgersignals zum Bereitstellen des Signals, das von dem Mehrträgersignal ableitbar ist.

9. Empfängervorrichtung zum Bereitstellen eines Ausgangssignals von einem empfangenen Mehrträgersignal, wobei das empfangene Mehrträgersignal Spektralkoeffizienten für Trägerfrequenzen eines Mehrträgerschemas umfasst, wobei die Spektralkoeffizienten von einem Eingangssignal gebildet werden durch Verarbeiten des Eingangssignals zum Erhalten einer Anzahl von Untersignalen, die aus aufeinanderfolgenden einzelnen Werten bestehen, wobei die Anzahl von Untersignalen gemeinsam die gleichen Informationen aufweisen wie das Eingangssignal, wobei die Anzahl von Untersignalen gleich oder größer 2 ist, und durch Zuweisen der einzelnen Werte der Anzahl von Untersignalen zu aufeinanderfolgenden Trägerfrequenzen, um ein Mehrträgersignal zu erhalten, wobei aufeinanderfolgende einzelne Werte eines ersten Untersignals jeder S-ten Trägerfrequenz, beginnend mit einer ersten Trägerfrequenz, zugewiesen sind, und wobei aufeinanderfolgende einzelne Werte eines zweiten Untersignals jeder S-ten Trägerfrequenz, beginnend mit einer zweiten Trägerfrequenz, zugewiesen sind, wobei sich die zweite Trägerfrequenz von der ersten Trägerfrequenz unterscheidet, und wobei S eine Zahl bezeichnet, die gleich oder größer ist als die Anzahl von Untersignalen, wobei die Empfängervorrichtung folgende Merkmale umfasst:

eine Neuzuweisungseinrichtung (1401, 1507) zum Neuzuweisen der Spektralkoeffizienten, wobei die Neuzuweisungseinrichtung wirksam ist, um eine empfangene Version der Anzahl von Untersignalen bereitzustellen; und
eine Wiederverarbeitungseinrichtung (1403) zum Wiederverarbeiten der empfangenen Version der Anzahl von Untersignalen, um eine empfangene Version des Eingangssignals als das Ausgangssignal zu erhalten, wobei die Wiederverarbeitungseinrichtung (1403) folgende Merkmale umfasst:

eine Einrichtung zum getrennten Decodieren der empfangenen Version der Anzahl von Untersignalen zum Bereitstellen einer Anzahl von decodierten empfangenen Untersignalen, wobei die Einrichtung zum Decodieren für jedes empfangene Untersignal einen Differenzdecodierer (1509) umfasst; und
eine Einrichtung zum Kombinieren der Anzahl von decodierten empfangenen Untersignalen zum Erhalten der empfangenen Version des Eingangssignals als das Ausgangssignal.

10. Empfängervorrichtung gemäß Anspruch 9, bei der die Spektralkoeffizienten Nummerierungsindizes eines Satzes von Nummerierungsindizes zugeordnet sind,
wobei die Neuzuweisungseinrichtung (1401, 1507) wirksam ist, um jeden S-ten Spektralkoeffizienten auszuwählen, beginnend mit einem Spektralkoeffizienten, der einen ersten Nummerierungsindex aufweist, zum Bereitstellen einer empfangenen Version eines ersten Untersignals der Anzahl von Untersignalen,
wobei die Neuzuweisungseinrichtung (1401, 1507) wirksam ist, um jeden S-ten Spektralkoeffizienten auszuwählen, beginnend mit einem Spektralkoeffizienten, der einen zweiten Nummerierungsindex aufweist, zum Bereitstellen einer empfangenen Version eines zweiten Untersignals der Anzahl von Untersignalen, und
wobei sich der erste Nummerierungsindex von dem zweiten Nummerierungsindex unterscheidet.

11. Empfängervorrichtung gemäß Anspruch 9 oder 10, bei der die Neuzuweisungseinrichtung (1401, 1507) eine Blockverschachtelungseinrichtung ist, die S Spalten und eine Anzahl von Zeilen aufweist, die durch eine Teilung einer Anzahl von Trägerfrequenzen des Mehrträgerschemas durch S bestimmt werden, oder
bei der die Neuzuweisungseinrichtung (1401, 1507) eine Blockverschachtelungseinrichtung ist, die S Zeilen und eine Anzahl von Spalten aufweist, die durch die Teilung der Anzahl von Trägerfrequenzen durch S bestimmt werden.

12. Empfängervorrichtung gemäß einem der Ansprüche 9 bis 11, bei der die Einrichtung zum Wiederverarbeiten für ein decodiertes empfangenes Untersignal eine Entschachtelungseinrichtung umfasst, zum Bereitstellen eines entschachtelten decodierten empfangenen Untersignals als das decodierte empfangene Untersignal.

13. Empfängervorrichtung gemäß einem der Ansprüche 9 bis 12, bei der die Einrichtung zum Kombinieren folgendes Merkmal umfasst:

einen Multiplexer (1503) zum Multiplexen der Anzahl von decodierten empfangenen Untersignalen in ein multiplextes empfangenes Signal als das Ausgangssignal.

14. Empfängervorrichtung gemäß Anspruch 13, die eine weitere Entschachtelungseinrichtung (1515) zum Entschachteln des multiplexten empfangenen Signals umfasst, um ein demultiplextes Signal als das Ausgangssignal zu erhalten.

15. Empfängervorrichtung gemäß einem der Ansprüche 9 bis 14, bei der das empfangene Mehrträgersignal aus einem empfangenen Signal gebildet wird durch einen Transformator zum Transformieren des empfangenen Signals in das empfangene Mehrträgersignal, und
wobei der Transformator (1505) wirksam ist, um eine Zeit/Frequenz-Transformation durchzuführen.

16. Empfängervorrichtung gemäß Anspruch 15, bei der das empfangene Signal eine Überlagerung eines ersten Signals, das einem Signal entspricht, das durch eine erste Empfangsantenne empfangen wurde, und einer verschobenen Version eines zweiten Signals ist, das einem Signal entspricht, das durch eine zweite Empfangsantenne empfangen wurde, wobei die verschobene Version durch eine Einrichtung zum Bereitstellen einer verschobenen Version bereitgestellt wird.

17. Empfängervorrichtung gemäß Anspruch 9, die zum Empfangen eines weiteren Mehrträgersignals angeordnet ist, das den gleichen Informationsinhalt hat wie das Mehrträgersignal, und
wobei die Neuzuweisungseinrichtung (1401, 1507) ferner wirksam ist, um das andere empfangene Mehrträgersignal neu zuzuweisen, um eine andere empfangene Version der Anzahl von Untersignalen zu erhalten,
wobei die Wiederverarbeitungseinrichtung (1403) angepasst ist, um zusätzlich die andere empfangene Version der Anzahl von Untersignalen zu verwenden, wenn das Ausgangssignal bereitgestellt wird.

18. Empfängervorrichtung gemäß einem der Ansprüche 9 bis 17, bei der die Wiederverarbeitungseinrichtung angeordnet ist, um für die aufeinanderfolgenden Werte der Signalausgabe weiche Werte auszugeben.

19. Verfahren zum Bereitstellen eines Mehrträgersignals, das über eine Mehrzahl von Trägerfrequenzen von einem Sendepunkt zu einem Empfangspunkt gesendet werden soll, das die folgenden Schritte umfasst:

Verarbeiten eines Eingangssignals zum Erhalten einer Anzahl von Untersignalen, die aus aufeinanderfolgenden einzelnen Werten bestehen, wobei die Anzahl von Untersignalen gemeinsam die gleichen Informationen aufweisen wie das Eingangssignal, wobei die Anzahl von Untersignalen gleich oder größer 2 ist, wobei die Verarbeitung das Teilen des Eingangssignals in eine Anzahl von geteilten Signalen umfasst, wobei die Anzahl von geteilten Signalen gleich der Anzahl von Untersignalen ist, und für jedes geteilte Signal differentielles, individuelles und getrenntes Codieren des jeweiligen geteilten Signals, um ein Untersignal der Anzahl von Untersignalen zu erhalten;
Zuweisen der einzelnen Werte der Anzahl von Untersignalen zu aufeinanderfolgenden Trägerfrequenzen, um ein Mehrträgersignal zu erhalten;

wobei aufeinanderfolgende einzelne Werte eines ersten Untersignals jeder S-ten Trägerfrequenz, beginnend mit einer ersten Trägerfrequenz, zugewiesen sind, und wobei aufeinanderfolgende einzelne Werte eines zweiten Untersignals jeder S-ten Trägerfrequenz, beginnend mit einer zweiten Trägerfrequenz, zugewiesen sind,
wobei sich die zweite Trägerfrequenz von der ersten Trägerfrequenz unterscheidet; und
wobei S eine Zahl bezeichnet, die gleich oder größer ist als die Anzahl von Untersignalen.

20. Verfahren zum Bereitstellen eines Ausgangssignals von einem empfangenen Mehrträgersignal, wobei das empfangene Mehrträgersignal Spektralkoeffizienten für Trägerfrequenzen eines Mehrträgerschemas umfasst, wobei die Spektralkoeffizienten von einem Eingangssignal gebildet werden durch Verarbeiten des Eingangssignals zum Erhalten einer Anzahl von Untersignalen, die aus aufeinanderfolgenden einzelnen Werten bestehen, wobei die Anzahl von Untersignalen gemeinsam die gleichen Informationen aufweisen wie das Eingangssignal, wobei die Anzahl von Untersignalen gleich oder größer 2 ist, und durch Zuweisen der einzelnen Werte der Anzahl von Untersignalen zu aufeinanderfolgenden Trägerfrequenzen, um ein Mehrträgersignal zu erhalten, wobei aufeinanderfolgende einzelne Werte eines ersten Untersignals jeder S-ten Trägerfrequenz, beginnend mit einer ersten Trägerfrequenz, zugewiesen sind, und wobei aufeinanderfolgende einzelne Werte eines zweiten Untersignals jeder S-ten Trägerfrequenz, beginnend mit einer zweiten Trägerfrequenz, zugewiesen sind, wobei sich die zweite Trägerfrequenz von der ersten Trägerfrequenz unterscheidet, mit den folgenden Schritten:

Neuzuweisen der Spektralkoeffizienten zum Bereitstellen einer empfangenen Version der Anzahl von Untersignalen; und
Neuverarbeiten der empfangenen Version der Anzahl von Untersignalen, um eine empfangene Version des Eingangssignals als das Ausgangssignal zu empfangen, wobei die Wiederverarbeitung das getrennte differentielle Decodieren jeder der empfangenen Versionen der Anzahl von Untersignalen umfasst, zum Bereitstellen einer Anzahl von decodierten empfangenen Untersignalen, und Kombinieren der Anzahl von decodierten Untersignalen zum Erhalten der empfangenen Version des Eingangssignals als das Ausgangssignal.

21. Computerprogramm mit einem Programmcode, der angepasst ist, um das Verfahren gemäß Anspruch 19 durchzuführen, oder angepasst ist, um das Verfahren gemäß Anspruch 20 durchzuführen, wenn das Programm auf einem Computer läuft.

**Revendications**

1. Appareil de production d'un signal à porteuses multiples à transmettre d'un point de transmission à un point de réception via une pluralité de fréquences porteuses, comprenant:

un processeur (101) destiné à traiter un signal d'entrée pour obtenir un nombre de sous-signaux composés de valeurs discrètes successives, où le nombre de sous-signaux ont collectivement les mêmes informations que le signal d'entrée, le nombre de sous-signaux étant égal ou supérieur à deux, où le processeur comprend un diviseur (201) destiné à diviser le signal d'entrée en un nombre de signaux divisés, le nombre de signaux divisés étant égal au nombre de sous-signaux, et, pour chaque signal divisé, un codeur différentiel (203; 409) configuré pour coder de manière différentielle, individuelle et séparée le signal divisé respectif, pour obtenir un sous-signal parmi le nombre de sous-signaux;
un moyen d'attribution (103, 411) destiné à attribuer les valeurs discrètes du nombre de sous-signaux aux fréquences porteuses successives, pour obtenir un signal à porteuses multiples;

dans lequel le moyen d'attribution (103, 411) est opérationnel pour attribuer des valeurs discrètes successives d'un premier sous-signal à chaque S$^{ème}$ fréquence porteuse en commençant par une première fréquence porteuse, et à attribuer des valeurs discrètes successives d'un deuxième sous-signal à chaque S$^{ème}$ fréquence porteuse en commençant par une deuxième fréquence porteuse, où la première fréquence porteuse est différente de la deuxième fréquence porteuse.

2. Appareil selon la revendication 1, dans lequel le diviseur (201) comprend:

un démultiplexeur (405) destiné à démultiplexer le signal d'entrée en un nombre de signaux démultiplexés;
pour un signal démultiplexé du nombre de signaux démultiplexés, un entremêleur (407) destiné à fournir une version entremêlée du signal démultiplexé comme signal divisé.

3. Appareil selon l'une quelconque des revendications 1 à 2, comprenant par ailleurs un entremêleur (403) présentant une sortie, la sortie étant couplée à une entrée du processeur.

4. Appareil selon l'une quelconque des revendications 1 à 3, dans lequel les fréquences porteuses successives sont associées à des indices de numérotation parmi un ensemble d'indices de numérotation successifs,
dans lequel la première fréquence porteuse est associée à un premier indice de numérotation, le premier indice de numérotation étant égal ou supérieur à un indice de numérotation le plus bas parmi l'ensemble d'indices de numérotation successifs, et
dans lequel la deuxième fréquence porteuse est associée à un deuxième indice de numérotation de l'ensemble d'indices de numérotation successifs,
dans lequel le deuxième indice de numérotation diffère du premier indice de numérotation, et
dans lequel le moyen d'attribution (103, 411) est opérationnel pour attribuer les valeurs discrètes du premier sous-signal à chaque S$^{ème}$ fréquence porteuse et pour attribuer les valeurs discrètes du sous-signal à chaque S$^{ème}$ fréquence porteuse en attribuant les valeurs discrètes respectives à des indices de numérotation respectifs.

5. Appareil selon l'une quelconque des revendications 1 à 4, dans lequel le moyen d'attribution (103, 411) est un entremêleur bloc présentant S rangées et un nombre de colonnes déterminé par une division du nombre de fréquences porteuses par S, ou
un entremêleur bloc présentant S colonnes et un nombre de rangées déterminé par la division du nombre de fréquences porteuses par S.

6. Appareil selon l'une quelconque des revendications 1 à 5, comprenant par ailleurs un transformateur (413; 808) destiné à transformer le signal à porteuses multiples et/ou un signal pouvant être dérivé du signal à porteuses multiples en un signal transformé en appliquant une transformée temps/fréquence au signal à porteuses multiples ou au signal pouvant être dérivé du signal à porteuses multiples.

**7.** Appareil selon la revendication 6, comprenant par ailleurs:

un moyen (415) destiné à fournir une copie du signal transformé;
un moyen (422) destiné à introduire une temporisation dans la copie du signal transformé;

dans lequel la copie du signal transformé présente un nombre de valeurs discrètes en commençant par une certaine valeur discrète ayant un indice de numérotation le plus bas parmi le nombre de valeurs discrètes, et
dans lequel le moyen (422) destiné à introduire une temporisation est opérationnel pour décaler la copie du signal transformé en réordonnant les valeurs discrètes de sorte que la certaine valeur devienne un indice de numérotation supérieur à l'indice de numérotation le plus bas.

**8.** Appareil selon la revendication 6 ou 7, comprenant par ailleurs un moyen destiné à fournir le signal pouvant être dérivé du signal à porteuses multiples, le moyen destiné à fournir comprenant:

un moyen destiné à fournir une copie du signal à porteuses multiples;
un moyen destiné à déphaser la copie du signal à porteuses multiples, pour fournir le signal pouvant être dérivé du signal à porteuses multiples.

**9.** Appareil récepteur pour produire un signal de sortie à partir d'un signal à porteuses multiples reçu, dans lequel le signal à porteuses multiples reçu comporte des coefficients spectraux pour des fréquences porteuses d'un schéma à porteuses multiples, les coefficients spectraux étant formés à partir d'un signal d'entrée en traitant le signal d'entrée, pour obtenir un nombre de sous-signaux composés de valeurs discrètes successives, où le nombre de sous-signaux présentent collectivement les mêmes informations que le signal d'entrée, le nombre de sous-signals étant égal ou supérieur à deux, et en attribuant les valeurs discrètes du nombre de sous-signaux à des fréquences porteuses successives, pour obtenir un signal à porteuses multiples, où les valeurs discrètes successives d'un premier sous-signal sont attribuées à chaque $S^{ème}$ fréquence porteuse en commençant par une première fréquence porteuse, et où les valeurs discrètes successives d'un deuxième sous-signal sont attribuées à chaque $S^{ème}$ fréquence porteuse en commençant par une deuxième fréquence porteuse, où la deuxième fréquence porteuse est différente de la première fréquence porteuse et où S désigne un nombre égal ou supérieur au nombre de sous-signaux, l'appareil récepteur comprenant:

un moyen de réattribution (1401, 1507) destiné à réattribuer les coefficients spectraux, le moyen de réattribuation étant opérationnel pour fournir une version reçue du nombre de sous-signaux; et
un reprocesseur (1403) destiné à retraiter la version reçue du nombre de sous-signaux, pour obtenir une version reçue du signal d'entrée comme signal de sortie, où le reprocesseur (1403) comprend:

un moyen destiné à décoder séparément la version reçue du nombre de sous-signaux, pour fournir un nombre de sous-signaux reçus décodés, où le moyen destiné à décoder comprend, pour chaque sous-signal reçu, un décodeur différentiel (1509); et
un moyen destiné à combiner le nombre de sous-signaux reçus décodés, pour obtenir la version reçue du signal d'entrée comme signal de sortie.

**10.** Appareil récepteur selon la revendication 9, dans lequel les coefficients spectraux sont associés à des indices de numérotation parmi un ensemble d'indices de numérotation,
dans lequel le moyen de réattribution (1401, 1507) est opérationnel pour sélectionner chaque $S^{ème}$ coefficient spectral en commençant par un coefficient spectral présentant un premier indice de numérotation, pour fournir une version reçue d'un premier sous-signal du nombre de sous-signaux,
dans lequel le moyen de réattribution (1401, 1507) est opérationnel pour sélectionner chaque $S^{ème}$ coefficient spectral en commençant par un coefficient spectral présentant un deuxième indice de numérotation, pour fournir une version reçue d'un deuxième sous-signal du nombre de sous-signaux, et
dans lequel le premier indice de numérotation diffère du deuxième indice de numérotation.

**11.** Appareil récepteur selon la revendication 9 ou 10, dans lequel le moyen de réattribution (1401, 1507) est un entremêleur bloc présentant S colonnes et un nombre de rangées déterminé par une division d'un nombre de fréquences porteuses du schéma à plusieurs porteuses par S, ou
dans lequel le moyen de réattribution (1401, 1507) est un entremêleur bloc présentant S rangées et un nombre de colonnes déterminé par la division d'un nombre de fréquences porteuses par S.

**12.** Appareil récepteur selon les revendications 9 à 11, dans lequel le moyen destiné à retraiter comprend, pour un sous-signal reçu décodé, un démêleur destiné à fournir un sous-signal reçu décodé démêlé comme sous-signal reçu décodé.

**13.** Appareil récepteur selon les revendications 9 à 12, dans lequel le moyen destiné à combiner comprend:

un multiplexeur (1503) destiné à multiplexer le nombre de sous-signaux reçus décodés en un signal reçu multiplexé comme signal de sortie.

**14.** Appareil récepteur selon la revendication 13, comprenant un autre démêleur (1515) destiné à démêler le signal reçu multiplexé, pour obtenir un signal démultiplexé comme signal de sortie.

**15.** Appareil récepteur selon les revendications 9 à 14, dans lequel le signal à porteuses multiples reçu est formé à partir d'un signal reçu par un transformateur destiné à transformer le signal reçu en signal à porteuses multiples reçu, et
dans lequel le transformateur (1505) est opérationnel pour effectuer une transformée temps/fréquence.

**16.** Appareil récepteur selon la revendication 15, dans lequel le signal reçu est une superposition d'un premier signal correspondant à un signal reçu par une première antenne de réception, et une version décalée d'un deuxième signal correspondant à un signal reçu par une deuxième antenne de réception, la version décalée étant fournie par un moyen destiné à fournir une version décalée.

**17.** Appareil récepteur selon la revendication 9, aménagé de manière à recevoir un autre signal à porteuses multiples présentant le même contenu d'information que le premier signal à porteuses multiples, et
dans lequel le moyen de réattribution (1401, 1507) est par ailleurs opérationnel pour réattribuer l'autre signal à porteuses multiples reçu, pour obtenir une autre version reçue du nombre de sous-signaux,
dans lequel le reprocesseur (1403) est adapté pour utiliser en outre l'autre version reçue du nombre de sous-signaux lors de la fourniture du signal de sortie.

**18.** Appareil récepteur selon les revendications 9 à 17, dans lequel le reprocesseur est aménagé pour sortir des valeurs douces pour les valeurs successives du signal sorti.

**19.** Procédé pour produire un signal à porteuses multiples à transmettre d'un point de transmission à un point de réception via une pluralité de fréquences porteuses, comprenant les étapes suivantes:

traiter un signal d'entrée, pour obtenir un nombre de sous-signaux composés de valeurs discrètes successives, où le nombre de sous-signaux ont collectivement les mêmes informations comme signal d'entrée, le nombre de sous-signaux étant égal ou supérieur à deux, où le traitement comprend la division du signal d'entrée en un nombre de signaux divisés, le nombre de signaux divisés étant égal au nombre de sous-signaux, et, pour chaque signal divisé, le codage différentiel, individuel et séparé du signal divisé respectif, pour obtenir un sous-signal parmi le nombre de sous-signaux;
attribuer les valeurs discrètes du nombre de sous-signaux à des fréquences porteuses successives, pour obtenir un signal à porteuses multiples;

dans lequel les valeurs discrètes successives d'un premier sous-signal sont attribuées à chaque S$^{ème}$ fréquence porteuse en commençant par une première fréquence porteuse, et dans lequel les valeurs discrètes successives d'un deuxième sous-signal sont attribuées à chaque S$^{ème}$ fréquence porteuse en commençant par une deuxième fréquence porteuse,
dans lequel la deuxième fréquence porteuse est différente de la première fréquence porteuse; et
dans lequel S désigne un nombre égal ou supérieur au nombre de sous-signaux.

**20.** Procédé pour produire un signal de sortie à partir d'un signal à porteuses multiples reçu, dans lequel le signal à porteuses multiples reçu comporte des coefficients spectraux pour des fréquences porteuses d'un schéma à porteuses multiples, les coefficients spectraux étant formés à partir d'un signal d'entrée en traitant le signal d'entrée, pour obtenir un nombre de sous-signaux composés de valeurs discrètes successives, où le nombre de sous-signaux présentent collectivement les mêmes informations que le signal d'entrée, le nombre de sous-signaux étant égal ou supérieur à deux, et en attribuant les valeurs discrètes du nombre de sous-signaux à des fréquences porteuses successives, pour obtenir un signal à porteuses multiples, où les valeurs discrètes successives d'un premier sous-signal sont attribuées à chaque $S^{\text{ème}}$ fréquence porteuse en commençant par une première fréquence porteuse, et où les valeurs discrètes successives d'un deuxième sous-signal sont attribuées à chaque $S^{\text{ème}}$ fréquence porteuse en commençant par une deuxième fréquence porteuse, dans lequel la deuxième fréquence porteuse est différente de la première fréquence porteuse, aux étapes suivantes consistant à :

réattribuer les coefficients spectraux, pour fournir une version reçue du nombre de sous-signaux; et
retraiter la version reçue du nombre de sous-signaux pour obtenir une version reçue du signal d'entrée comme signal de sortie, où le retraitement comprend le fait de décoder de manière différentielle séparément chacune des versions reçues du nombre de sous-signaux, pour fournir un nombre de sous-signaux reçus décodés, et de combiner le nombre de sous-signaux décodés, pour obtenir la version reçue du signal d'entrée comme signal de sortie.

21. Programme d'ordinateur ayant un code de programme adapté pour réaliser le procédé selon la revendication 19 ou adapté pour réaliser le procédé selon la revendication 20 lorsque le programme est exécuté sur un ordinateur.

# FIG 1

101

103

Processor

Assigner

Input
signal

Number of
sub-signals

Multicarrier
signal

# FIG 2

Figure 2: Block diagram showing Input signal entering Divider (201), producing a Number of divided signals, each fed to a Coder (203), producing a Number of sub-signals. Overall block labeled 101.

EP 1 661 346 B1

# FIG 3

first sub-signal:
[x(0), x(1), x(2), x(3)]

second sub-signal:
[y(0), y(1), y(2), y(3)]

301

**Assigner**

$x(0) \longrightarrow c(0)$
$y(0) \longrightarrow c(1)$
$x(1) \longrightarrow c(2)$
$y(1) \longrightarrow c(3)$
$x(2) \longrightarrow c(4)$
$y(2) \longrightarrow c(5)$
$x(3) \longrightarrow c(6)$
$y(3) \longrightarrow c(7)$

c(0)

c(1)

c(7)

number of
sub-signals

303

103

Multicarrier
signal

EP 1 661 346 B1

FIG 4

EP 1 661 346 B1

FEC encoder — $\Pi_1$ — DEMUX — $\Pi_2^{(1)}$ ⋯ $\Pi_2^{(S)}$

401  403  405  407  409  411  415  417  419  421  422  423  425  413

$\Delta_2$  $\Delta_m$  GI

S  N₁·S  N₂

FIG 5

FIG 6

# FIG 7A

1 transmit antenna:

# FIG 7B

Cyclic delay diversity:

FIG 8

# FIG 9

## FIG 10

# FIG 11

# FIG 12

# FIG 13

FIG 14

# FIG 15

# FIG 16

EP 1 661 346 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6347120 B1

- US 2003072382 A1

### Non-patent literature cited in the description

- **A. DAMMANN ; S. KAISER.** Standard conformable antenna diversity techniques for OFDM systems and its application to the DVB-T system. *IEEE Globecom,* November 2001, 3100-3105
- **A. DAMMANN ; S. KAISER.** Low complex standard conformable antenna diversity techniques for OFDM systems and its application to the DVB-T system. *4th International ITG Conference on Source and Channel Coding,* January 2002, 253-259
- **A. DAMMANN ; R. RAULEFS ; S. KAISER.** Beamforming in combination with space-time diversity for broadband OFDM systems. *IEEE Conference on Communications,* April 2002, 165-171
- **B. ALLEN ; F. SAID ; G. BAUCH ; G. AUER ; H. AGHVAMI.** Differential cyclic delay diversity for multi-carrier based transmission schemes. *IEEE Proceedings on Communications,* 2003
- **A. DAMMANN ; P. LUSINA ; M. BOSSERT.** On the equivalence of space-time block coding with multipath propagation and/or cyclic delay diversity in OFDM. *IEEE European Wireless,* 2002
- **M. BOSSERT ; A. HUEBNER ; F. SCHUEHLIEN ; H. HAAS ; E. COSTA.** On cyclic delay diversity in OFDM based transmission schemes. *OFDM Workshop,* 2002
- **D. GORE ; S. SANDHU ; A. PAULRAJ.** Delay diversity codes for frequency selective channels. *International Conference on Communications,* April 2002, 19498-1953
- **B. HOCHWALD ; W. SWELDEN.** Differential unitary space-time modulation. *IEEE Transactions on Communications,* December 2000, vol. 48 (12), 2041-2052
- **B. L. HUGHES.** Differential space-time modulation. *IEEE Transactions on Information Theory,* November 2000, vol. 46 (7), 2567-2578
- **V. TAROKH ; H. JAFARKHANI.** A differential detection scheme for transmit diversity. *IEEE Journal on Selected Areas in Communications,* July 2000, vol. 18 (7), 1169-1174